# EUROPÄISCHE PATENTSCHRIFT

(11) **EP 4 247 616 B1**
(45) Veröffentlichungstag und Bekanntmachung des Hinweises auf die Patenterteilung: **12.03.2025**
(21) Anmeldenummer: 21823197.5
(22) Anmeldetag: 22.11.2021
(51) Int. Cl.: B29C 53/12, B29C 48/09, B29C 48/32

(54) **VERFAHREN UND VORRICHTUNG ZUR HERSTELLUNG EINER ROHRWENDEL AUS EINEM THERMOPLASTISCHEN KUNSTSTOFF**
METHOD AND DEVICE FOR PRODUCING A COILED TUBING FROM A THERMOPLASTIC MATERIAL
PROCÉDÉ ET DISPOSITIF DE FABRICATION D'UNE SPIRALE TUBULAIRE EN MATIÈRE PLASTIQUE THERMOPLASTIQUE

(30) Priorität: 23.11.2020 DE 102020007133
(43) Veröffentlichungstag der Anmeldung: 27.09.2023
(73) Patentinhaber: TRUPLAST Kunststofftechnik GmbH, 35428 Langgöns (DE)
(72) Erfinder: HOLST, Marco, 64625 Bensheim (DE); STEITZ, Ingo, 35460 Staufenberg (DE)
(74) Vertreter: Oppermann, Mark
(86) Internationale Anmeldenummer: PCT/EP2021/082561
(87) Internationale Veröffentlichungsnummer: WO 2022/106705

(56) Entgegenhaltungen:
- DE-B- 1 291 895
- US-A- 2 601 269
- US-A- 4 929 167

## Beschreibung

### TECHNISCHES GEBIET

Die vorliegende Erfindung bezieht sich auf ein Verfahren und eine Vorrichtung zur Herstellung einer Rohrwendel aus einem thermoplastischen Kunststoff. Insbesondere bezieht sich die Erfindung auf ein Verfahren und eine Vorrichtung zur Herstellung von Rohrwendeln als Verbindungsleitungen von z.B. Druckluftbremsanlagen, wie sie etwa in Sattelkraftfahrzeugen oder Zügen massenweise zum Einsatz kommen.

### HINTERGRUND DER ERFINDUNG UND STAND DER TECHNIK

Druckfeste, biegeelastische Rohrwendeln aus Polyamid (PA) sind als Verbindungsleitungen von Druckluftbremsanlagen in Sattelkraftfahrzeugen und Zügen genormt (DIN 74 323 mit Verweis auf u.a. DIN 74324-1 hinsichtlich des Rohrwerkstoffs). Gegenstand der erstgenannten Norm sind neben Maßen, Bezeichnungen und Kennzeichnungen an der fertigen, mit Knickschutz und Anschlüssen versehenen Rohrwendel die verwendeten Werkstoffe für Rohr und Anschlussteile, deren Oberflächenbeschaffenheit, der zulässige Betriebsüberdruck und -temperaturbereich, die Anforderungen im Hinblick auf Auszugskraft, Rückstellverhalten, Abzugskraft der Verschraubungen, Knicksicherheit und Dichtheit sowie die zur Überprüfung der Erfüllung der insoweit genormten Anforderungen durchzuführenden Prüfungen. Was die Maße angeht, ist der Außendurchmesser des Rohrs in der Norm mit einer Plus-/ Minus-Toleranz versehen, die eine Ovalität des Rohrquerschnitts berücksichtigt, welche durch das Wendeln des Rohrs, d.h. durch das herkömmliche Verfahren zur Herstellung einer Rohrwendel aus einem thermoplastischen Kunststoff entsteht.

Im Stand der Technik wird zur Herstellung einer Rohrwendel aus einem thermoplastisch verarbeitbaren Polymer üblicherweise ein extrudiertes Rohr mit einem vorbestimmten Querschnitt abgelängt, in einem kalten Zustand, vorzugsweise bei Raumtemperatur, wendelförmig um einen Dorn gewickelt, wobei das Rohr mit seiner Längsachse etwa rechtwinklig zur Dorn- bzw. Wendelachse ausgerichtet wird, und nachfolgend einer Thermofixierung unterzogen. Derartige Verfahren zur Herstellung von Rohrwendeln durch nachträgliche Formgebung durch Wickeln und Thermofixierung sind beispielsweise aus den Druckschriften US 3,021,871 und US 3,245,431 bekannt.

Um diesem Stand der Technik gegenüber das Rückstellvermögen der erzeugten Rohrwendel zu verbessern, wird ferner in der Druckschrift DE 39 43 189 A1 ein Verfahren zur Herstellung von Rohrwendeln vorgeschlagen, bei dem das abgelängte Rohr während seiner Zuführung zum Aufwickeln auf den Dorn in Zuführrichtung gesehen um seine Längsachse in einer Drehrichtung entgegen der Drehrichtung der sich bildenden Wendel verdreht wird. Darüber hinaus lehrt die Druckschrift DE 39 43 189 A1, die Thermofixierung der um ihre Längsachse verdrehten und aufgewickelten extrudierten Rohre vorzugsweise in Luft oder in einem flüssigen Medium durchzuführen, das ein Mineralöl-, Silikonöl- oder Polydiol-Bad sein kann. Hierbei hängt die Fixierdauer von der Wanddicke des Rohrs ab und kann z.B. für 1 mm Polyamid 10 bis 15 Minuten und für 2 mm Polyamid 20 bis 30 Minuten in Luft betragen. In der Regel erfolgt diese Thermofixierung der Rohrwendel in einem geschlossenen Ofen bei einer Temperatur von 120°C bis 160°C.

Dieser mehrstufige Herstellungsprozess ist zeitaufwändig, bedingt einen nicht unerheblichen logistischen Aufwand und ist auch nicht energieeffizient. Zunächst muss nämlich der thermoplastische Kunststoff zum Extrudieren der geraden Rohre aufgeschmolzen und im Anschluss daran wieder auf Raumtemperatur abgekühlt werden. Nach dem Ablängen und Aufwickeln muss das gewendelte Rohr erneut wie oben beschrieben erwärmt werden, um die Rohrwendel thermisch zu fixieren.

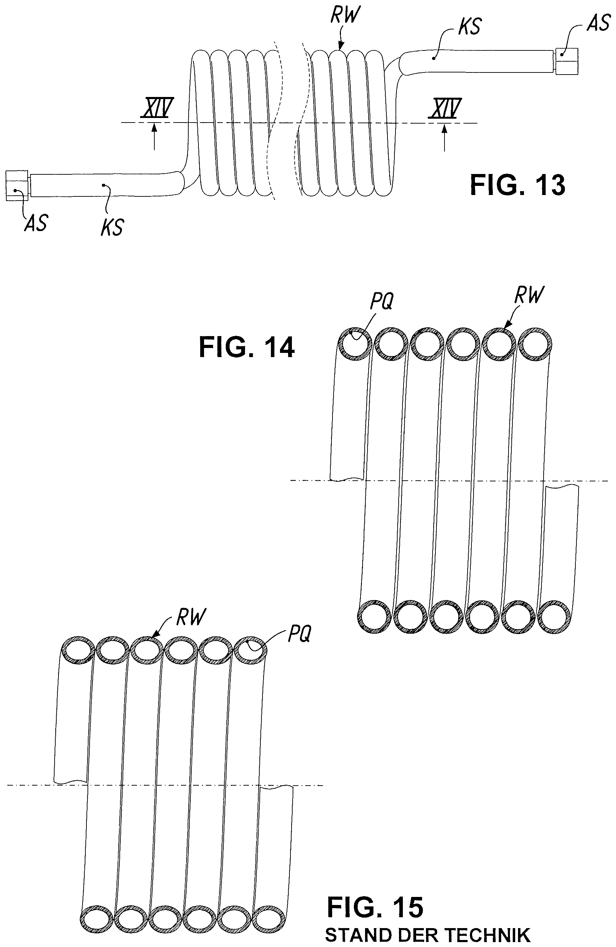

Den insoweit beschriebenen bekannten Herstellungsverfahren ist weiterhin gemein, dass sich infolge des Wickelvorgangs eine Ovalität des Rohrquerschnitts der fertigen Rohrwendel ergibt (vgl. hierzu die beigefügte Fig. 15), wie sie in der oben erwähnten Norm angesprochen wird und für bestimmte Anwendungen nicht erwünscht sein kann. Außerdem ist mit einem solchen Vorgehen eine Endlosfertigung einer Rohrwendel nicht möglich.

In der Druckschrift GB 1 518 424 wird des Weiteren ein alternatives Verfahren zur Herstellung von Rohrwendeln offenbart. Bei diesem Stand der Technik wird in einem ersten Prozessschritt ein Rohr extrudiert, lose aufgewickelt und abgekühlt. In einem zweiten Prozessschritt wird das Rohr erneut erhitzt und mittels Führungsrollenpaaren zu einer Spirale geformt, wobei jeweils eine Führungsrolle innerhalb und eine Führungsrolle außerhalb der Spirale angeordnet ist. Hierbei werden alle Führungsrollen mittels eines geeigneten Getriebes angetrieben. Die so erzeugte, noch heiße Spirale wird danach gekühlt, wobei sie von Stützrollen gestützt wird, die ebenfalls durch das Getriebe angetrieben werden.

Neben dem erneut hohen Aufwand an Zeit und Energie wird ein Nachteil dieses Stands der Technik insbesondere darin gesehen, dass die Gefahr besteht, dass sich der Rohrquerschnitt des zunächst abgekühlten, extrudierten Rohrs nach seiner erneuten Erwärmung beim Wickeln zur Wendel in unerwünschter Weise verformt.

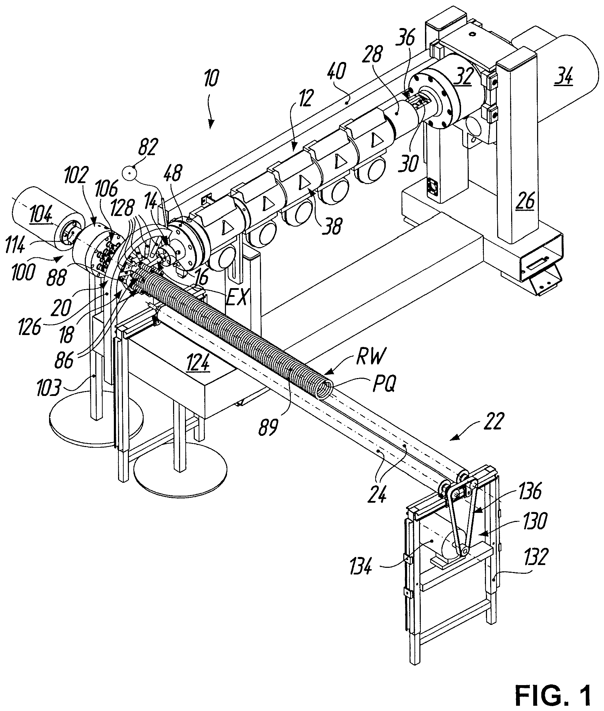

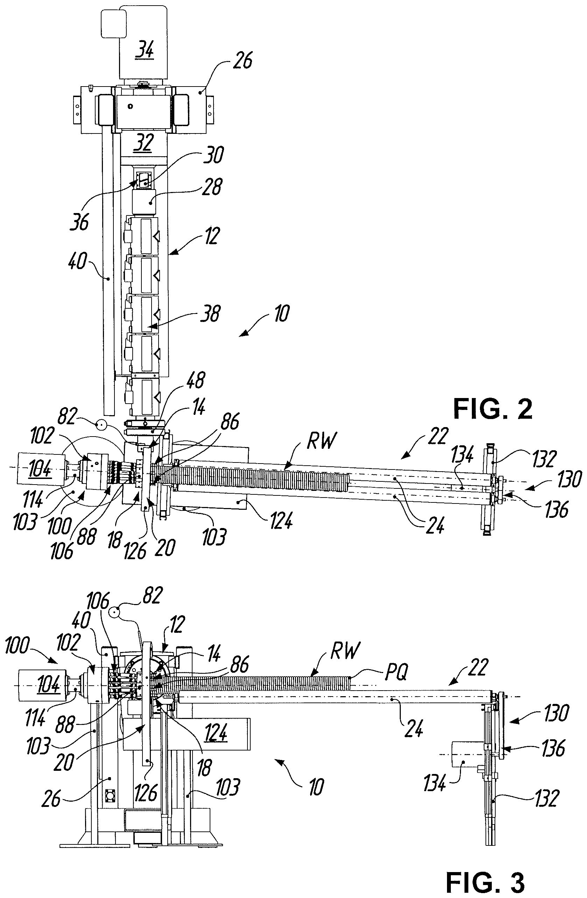

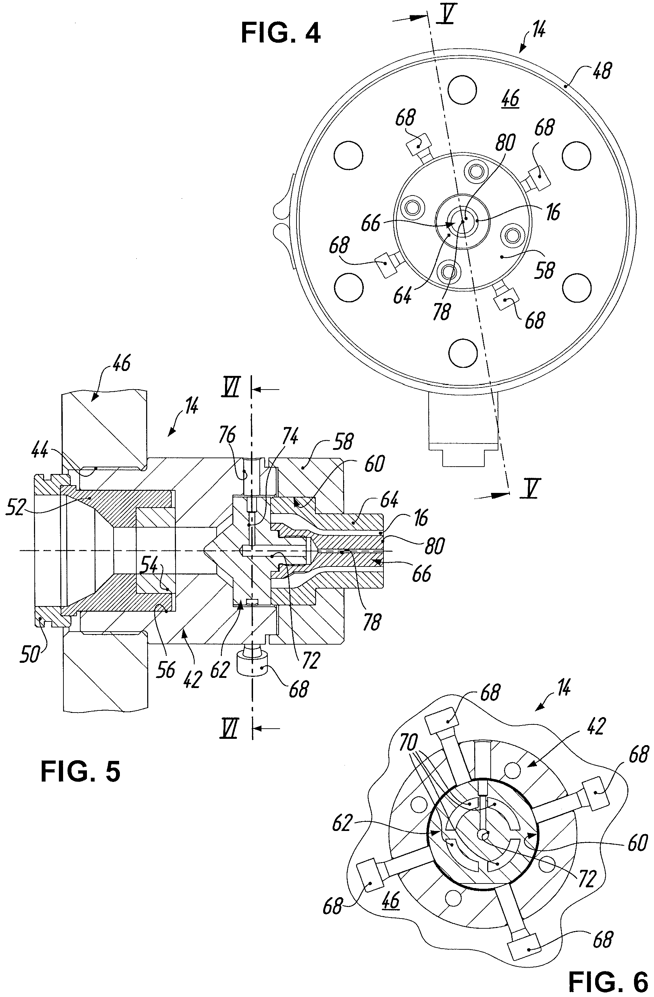

Schließlich ist aus der Druckschrift US 4,929,167 eine Vorrichtung zur Herstellung von Rohrwendeln aus einem Kunststoffmaterial bekannt, bei der zunächst mittels eines Extruders ein Rohr mit einem runden Querschnitt extrudiert wird. Dabei ist die Wanddicke entlang des Umfangs des Rohrs so einstellbar, dass die Wanddicke nach einer Umformung des Rohrs in einer direkt hinter dem Extruder angeordneten Einrichtung zum Umformen des Rohrs zu einer Spirale an jeder Stelle gleich dick ist. Wie in der Fig. 6 dieser Druckschrift ersichtlich, wird das Rohr bei diesem Stand der Technik also so extrudiert, dass es nach dem Extruder im Querschnitt gesehen eine Geometrie aufweist, bei der der Innenumfang bezüglich des Außenumfangs exzentrisch versetzt ist. Zur Umformung zu der Spirale wird das Rohr dann durch eine Schlicht- und Kühlhülse mit einem Rundgang geführt, der durch zwei halbrunde Nuten in zwei mittels Wasser gekühlten Formhälften gebildet ist. Wie in Fig. 1 dieser Druckschrift ersichtlich, sind in der Schlicht- und Kühlhülse fünf Stützstellen vorgesehen, von denen eine in der Schnittdarstellung 3-3 gemäß Fig. 3 dargestellt ist. Demnach sind abgehend von dem Rundgang Vakuumdurchgänge ausgebildet, über die von außen an dem Rohr ein Unterdruck angelegt werden kann, um das Rohr während des Formgebungsprozesses zu dehnen und gegen die Wand zu ziehen. Darüber hinaus umfasst die Einrichtung zum Umformen des Rohrs eine hinter den Formhälften angeordnete Rollenanordnung, mittels der das gewendelte und heruntergekühlte Rohr gefördert wird.

### AUFGABENSTELLUNG

Der Erfindung liegt ausgehend vom Stand der Technik gemäß der Druckschrift GB 1 518 424 die Aufgabe zugrunde, ein möglichst einfaches Verfahren zur Herstellung einer Rohrwendel aus einem thermoplastischen Kunststoff bereitzustellen, dass die oben zum Stand der Technik angesprochenen Probleme adressiert. Insbesondere soll das Herstellungsverfahren eine möglichst schnelle und kostengünstige (Endlos)Fertigung einer Rohrwendel mit einem geometrisch klar definierten Profilquerschnitt des Rohrs, beispielsweise einem kreisringförmigen Profilquerschnitt ermöglichen. Die Erfindungsaufgabe umfasst ferner die Angabe einer Vorrichtung zur Herstellung einer solchen Rohrwendel, die eine möglichst einfache, schnelle und kostengünstige Herstellung der Rohrwendel in einer Endlosfertigung gestattet.

### DARSTELLUNG DER ERFINDUNG

Diese Aufgaben werden durch ein Verfahren zur Herstellung einer Rohrwendel aus einem thermoplastischen Kunststoff mit den Merkmalen des Patentanspruchs 1 bzw. eine Vorrichtung zur Herstellung einer Rohrwendel aus einem thermoplastischen Kunststoff mit den Merkmalen des Patentanspruchs 5 gelöst. Vorteilhafte Ausgestaltungen der Erfindung sind Gegenstand der abhängigen Patentansprüche.

Ein erfindungsgemäßes Verfahren zur Herstellung einer Rohrwendel aus einem thermoplastischen Kunststoff zeichnet sich dadurch aus, dass, nachdem in einem ersten Formgebungsschritt ein rohrförmiges Extrudat über einen ringförmigen Düsenspalt eines Extruders extrudiert wurde, das vom Düsenspalt heruntergezogene, noch plastisch formfähige Extrudat in einem zweiten Formgebungsschritt direkt im Anschluss an den ersten Formgebungsschritt in einer Umformeinrichtung zur Erzielung eines geometrisch definierten Profilquerschnitts kalibriert sowie zu der Rohrwendel umgeformt wird, bevor die Rohrwendel mit dem geometrisch bestimmten Profilquerschnitt erstarrt, wobei das Kalibrieren des noch plastisch formfähigen Extrudats in der Umformeinrichtung unter der Zufuhr von Stützluft durch einen Hohlraum des Extrudats erfolgt.

Vorrichtungsseitig sieht die Erfindung eine Vorrichtung zur Herstellung einer Rohrwendel aus einem thermoplastischen Kunststoff vor, umfassend einen Extruder mit einem Spritzkopf, der einen ringförmigen Düsenspalt aufweist, über den ein rohrförmiges Extrudat in einem plastisch formfähigen Zustand abgebbar ist, und eine Umformeinrichtung für die weitere Formgebung des plastisch formfähigen, rohrförmigen Extrudats zu der Rohrwendel mit einem geometrisch definiert kalibrierten Profilquerschnitt, wobei die Umformeinrichtung angetrieben und so bezüglich des Spitzkopfs des Extruders angeordnet ist, dass sie das rohrförmige Extrudat im plastisch formfähigen Zustand direkt vom ringförmigen Düsenspalt herunterzuziehen vermag, und wobei der Spritzkopf des Extruders eine Stützluftbohrung aufweist, die an einer Stirnfläche des Spritzkopfs radial innerhalb des ringförmigen Düsenspalts mündet.

Die Erfindung stellt also verfahrens- wie vorrichtungsseitig im Kern darauf ab, das vom Düsenspalt heruntergezogene, plastisch formfähige Extrudat unmittelbar nach dem Extrudieren - also ohne ein zwischenzeitliches Abkühlen/Erstarren oder Ablängen - fortlaufend weiter umzuformen, und zwar derart, dass zugleich die Wendelform geschaffen und der Profilquerschnitt der entstehenden Rohrwendel geometrisch definiert kalibriert wird.

Dieses Vorgehen ermöglicht es, Rohrwendeln vorteilhaft in einer Endlosfertigung herzustellen, und das sehr schnell. Dabei werden weniger Fertigungsschritte als bei den vorbekannten Herstellungsverfahren benötigt. Außerdem ist hierfür im Vergleich zum vorbeschriebenen Stand der Technik weniger Energie vonnöten. In Summe ist die Herstellung der Rohrwendeln im Hinblick auf Zeit und Kosten schneller und effizienter als im Stand der Technik.

Zudem entsteht gemäß der Erfindung erst in der Umformeinrichtung ein geometrisch definiert kalibrierter Profilquerschnitt der Rohrwendel, anders als im eingangs geschilderten Stand der Technik, bei dem infolge der Umformung zur Rohrwendel der Profilquerschnitt des Rohrs nicht voll erhalten bleibt, vielmehr eine Verformung (Ovalität) erfährt. Somit hat der Profilquerschnitt der erfindungsgemäß erzeugten Rohrwendel im Hinblick auf Form- und Größentoleranzen eine neue, bessere Qualität.

So kann beispielsweise das noch plastisch formfähige Extrudat in dem zweiten Formgebungsschritt zur Erzielung eines im Wesentlichen kreisringförmigen Profilquerschnitts kalibriert werden. Die Erzeugung anderer, ringartiger Querschnittsformen, z.B. gewellter oder mehreckiger Ringquerschnitte an der Rohrwendel ist indes ebenfalls mit hoher Formtreue möglich, wie gewünscht oder erforderlich.

Im Hinblick auf eine besonders hohe Formtreue des Profilquerschnitts der erzeugten Rohrwendel ist ferner bei dem Herstellungsverfahren vorgesehen, dass das Kalibrieren des noch plastisch formfähigen Extrudats in der Umformeinrichtung unter der Zufuhr von Stützluft durch einen Hohlraum des Extrudats erfolgt.

Hierfür weist der Spritzkopf des Extruders eine Stützluftbohrung auf, die an einer Stirnfläche des Spritzkopfs radial innerhalb des ringförmigen Düsenspalts mündet.

In einer zweckmäßigen Ausgestaltung des Herstellungsverfahrens kann das noch plastisch formfähige Extrudat für den zweiten Formgebungsschritt vom Düsenspalt mittels der Umformeinrichtung heruntergezogen werden. Die Anordnung kann aber auch so getroffen sein, dass das Herunterziehen durch Schwerkraft von einem vertikal ausgerichteten Extruder erfolgt.

Grundsätzlich ist es möglich, dass das Extrudat während des zweiten Formgebungsschritts in der Umformeinrichtung passiv abkühlt und erstarrt. Insbesondere mit Blick auf eine schnelle Prozessführung ist es demgegenüber allerdings bevorzugt, wenn das Extrudat während des zweiten Formgebungsschritts in der Umformeinrichtung aktiv gekühlt wird.

Zur aktiven Kühlung des Extrudats kann beispielsweise kalte Luft verwendet werden, die in der Umformeinrichtung auf das Extrudat geblasen wird. Im Hinblick auf eine besonders gute Wärmeabfuhr vom Extrudat und der Umformeinrichtung ist es bevorzugt, wenn zur aktiven Kühlung des Extrudats in der Umformeinrichtung ein flüssiges Kühlmittel, wie beispielsweise Wasser, verwendet wird.

Vorrichtungsseitig kann hierfür im Bereich der Umformeinrichtung eine Kühleinrichtung zur Abgabe eines Kühlfluids vorgesehen sein, mittels der das durch die Umformeinrichtung geförderte Extrudat aktiv kühlbar ist.

Die Konfektionierung der Rohrwendel im Hinblick auf Länge und Abgänge bzw. Anschlüsse erfolgt erst, nachdem die erstarrte Rohrwendel die Umformeinrichtung verlassen hat. So kann die erstarrte Rohrwendel nach Verlassen der Umformeinrichtung in einem ersten Konfektionierungsschritt definiert abgelängt werden. In einem zweiten Konfektionierungsschritt kann dann die definiert abgelängte Rohrwendel an einem oder beiden Enden mit einem Knickschutz und/oder einem Anschlussstück versehen werden.

Die vorbeschriebenen Konfektionierungsschritte können, müssen aber nicht bei dem Hersteller der Rohrwendel erfolgen. Auch ist es möglich, dass die endlos gefertigte Rohrwendel in einem sehr langen Stück (oder nur definiert abgelängt) zur (weiteren) Konfektionierung z.B. an den Hersteller von Endgeräten, wie Kompressoren, oder von Druckluftbremsanlagen geliefert wird, wo dann die Montage der Anschlussstücke mit oder ohne Knickschutz erfolgt.

Eine Möglichkeit zur Formgebung der Rohrwendel (Spiralverlauf und Querschnittskalibrierung) in der Umformeinrichtung besteht z.B. darin, Letztere mit zwei biegeschlaffen Endlosriemen zu versehen, zwischen denen die weitere Umformung des vom Extruder heruntergezogenen Extrudats erfolgt. Dabei sind beide Endlosriemen als Formriemen mit einer hohlkehlenartigen, sich längs des jeweiligen Riemens erstreckenden Ausnehmung ausgebildet. Einer der Endlosriemen ist als innerer Formriemen mit einer geeigneten seitlichen Führung spiralförmig um einen drehbaren, etwa zylindrischen Kern gewickelt, z.B. mit drei bis fünf Windungen, und zwar so, dass die hohlkehlenartige Ausnehmung nach radial außen zeigt. Vom drehbaren Kern radial beabstandet sind beispielsweise zwei Umlenkrollen für den inneren Formriemen mit einem axialen Abstand zueinander vorgesehen. Über die eine Umlenkrolle wird der innere Formriemen zum drehbaren Kern hingeführt, während die andere Umlenkrolle dazu dient, den inneren Formriemen vom Kern wegzuführen, so dass der innere Formriemen in einer Endlosschleife um den Kern und die Umlenkrollen umläuft. Der andere Endlosriemen hingegen ist als äußerer Formriemen dem Spiralverlauf des inneren Formriemens folgend und mit einer entsprechenden formschlüssigen Führung um den inneren Formriemen gewickelt, und zwar derart, dass die hohlkehlenartige Ausnehmung nach radial innen, zum Kern hin zeigt. Ein weiteres Umlenkrollenpaar für den äußeren Formriemen ist auf bezüglich des Kerns gegenüberliegender Seite zu den Umlenkrollen für den inneren Formriemen angeordnet und dient in analoger Weise dazu, den äußeren Formriemen in einer Endlosschleife zum drehbaren Kern hin bzw. vom Kern wegzuführen. Somit bilden die inneren und äußeren Formriemen mit ihren einander zugewandten, hohlkehlenartigen Ausnehmungen eine hohle Spiralbahn zur Formung des vom Extruder heruntergezogenen, rohrförmigen Extrudats zu der Rohrwendel mit einem geometrisch bestimmt kalibrierten Profilquerschnitt.

Einer derart ausgestalteten Umformeinrichtung gegenüber ist insbesondere im Hinblick auf eine hohe Prozesssicherheit bevorzugt indes eine Ausgestaltung, bei der die Umformeinrichtung eine Mehrzahl von drehend antreibbaren Formwellen aufweist, die derart an einem drehfesten Wellenhalter angeordnet sind, dass sie einen Innenring von Formwellen und einen Außenring von Formwellen bilden, wobei die Formwellen des Innenrings gegenläufig zu den Formwellen des Außenrings antreibbar sind, um das plastisch formfähige, rohrförmige Extrudat zwischen dem Innenring und dem Außenring zu fördern. Hierbei kann jede Formwelle eine Mehrzahl von formgebenden Radialnuten mit einem geometrisch definierten Nutquerschnitt aufweisen, die entlang einer Mittelachse der Formwelle gesehen geringfügig beabstandet voneinander hintereinander angeordnet sind. Zur Erzielung eines z.B. im Wesentlichen kreisringförmigen Profilquerschnitts weisen die formgebenden Radialnuten der Formwellen einen im Wesentlichen halbkreisförmigen Nutquerschnitt auf; andere Nutquerschnittsformen sind indes auch möglich, entsprechend der gewünschten oder erforderlichen Form des Profilquerschnitts an der zu erzeugenden Rohrwendel.

Vorzugsweise stehen die Formwellen entsprechend der Steigung der herzustellenden Rohrwendel unterschiedlich weit von dem Wellenhalter vor und/oder sind mit ihren Mittelachsen bezüglich einer Mittelachse des Wellenhalters verkippt, um mit ihren formgebenden Radialnuten eine im Wesentlichen spiralförmige Bahn für das plastisch formfähige, rohrförmige Extrudat zu bilden. Als Alternative hierzu können die Radialnuten in der jeweiligen Formwelle an anderer axialer Stelle ausgebildet sein und/oder es kann eine winkelmäßige Verkippung der jeweiligen Formwelle entfallen, so dass diese parallel zur Mittelachse des Wellenhalters verläuft. Die vorher erwähnte Ausgestaltung ist demgegenüber aber bevorzugt, weil zum einen die Formwellen des jeweiligen Rings kostengünstig als Gleichteile ausgebildet werden können und zum anderen die geschaffene, im Wesentlichen spiralförmige Bahn für das Extrudat gleichmäßiger verläuft, was auch einer leichteren Führung des Extrudats zwischen den Formwellen förderlich ist.

Insbesondere im Hinblick auf ein möglichst einfaches Anfahren der Produktion der Rohrwendel und eine hohe Arbeitssicherheit bei der Produktion der Rohrwendel bevorzugt ist ferner eine Ausgestaltung der Umformeinrichtung, bei der mindestens eine Formwelle des Außenrings mehrteilig ausgebildet ist - mehr bevorzugt alle Formwellen des Außenrings mehrteilig ausgebildet sind - (jeweils) mit einem im Wellenhalter drehbar gelagerten Wellenstumpf und einem daran lösbar anbringbaren Wellensegment, welches die formgebenden Radialnuten der Formwelle aufweist.

Hierbei kann die bzw. jede mehrteilig ausgebildete Formwelle des Außenrings in einer besonders kostengünstigen und einfachen Ausgestaltung eine magnetische Kupplung aufweisen, die dazu dient, das Wellensegment lösbar am Wellenstumpf zu halten. Besondere Vorteile dieser Verbindungsart bestehen darin, dass sich die Montage des Wellensegments am zugeordneten Wellenstumpf sehr einfach gestaltet und sich ein einmal aus seiner Verbindung zum zugeordneten Wellenstumpf ausgelenktes Wellensegment selbsttätig in seine Ausgangslage am Wellenstumpf zurückbewegen kann. Andere Verbindungslösungen mit Form- und/oder Reibschluss, wie zum Beispiel ein Kugelschnäpper oder eine Klemmung, sind hier allerdings auch denkbar.

Das Wellensegment und der Wellenstumpf der mehrteilig ausgebildeten Formwelle des Außenrings können ferner mit komplementär ausgebildeten Strukturen versehen sein, die zur Drehmomentübertragung formschlüssig miteinander in Eingriff bringbar sind, was gegenüber anderen Möglichkeiten der Drehmomentübertragung mit z.B. Kraft- oder Reibschluss zuverlässiger ist. In einer zweckmäßigen und im Hinblick auf eine gute Kippfähigkeit des Wellensegments bezüglich des zugeordneten Wellenstumpfs bevorzugten Ausgestaltung können die komplementären Strukturen an Wellensegment und Wellenstumpf durch Stifte an dem einen Teil und nach außen offene Ausnehmungen an dem anderen Teil gebildet sein, die im montierten Zustand der mehrteilig ausgebildeten Formwelle des Außenrings ineinandergreifen.

In einer einfachen Ausgestaltung der Vorrichtung können die Formwellen des Außenrings und die Formwellen des Innenrings mittels einer gemeinsamen Antriebseinrichtung antreibbar sein. Alternativ dazu können auch zwei oder mehr Antriebseinrichtungen vorgesehen sein, um die Formwellen den jeweiligen Umformerfordernissen und ggf. verschiedenen Querschnittsabmessungen der zu erzeugenden Rohrwendeln entsprechend flexibel ringweise oder sogar individuell anzutreiben.

Die gemeinsame Antriebseinrichtung kann hierbei in besonders einfacher Ausbildung einen Motor haben, der mit einer Eingangswelle eines Radialverteilergetriebes in Antriebsverbindung steht, das entsprechend der Anzahl der Formwellen der Umformeinrichtung Ausgangswellen aufweist, die ihrerseits mit jeweils einer Formwelle der Umformeinrichtung in Antriebsverbindung stehen.

Vorzugsweise stehen die Ausgangswellen des Radialverteilergetriebes über Teleskop-Kreuzgelenkwellen mit den Formwellen der Umformeinrichtung in Antriebsverbindung. Vorteile bestehen hier darin, dass eine einfache Anpassbarkeit an verschiedene Wellenhalter gegeben und damit ein schneller Werkzeugwechsel in der Umformeinrichtung möglich ist; zudem sind derartige Teleskop-Kreuzgelenkwellen als Kaufteile am Markt gut verfügbar.

In einer besonders vorteilhaften Ausgestaltung der Vorrichtung kann das Radialverteilergetriebe der Antriebseinrichtung zwei Getriebestufen aufweisen, nämlich eine Getriebestufe für den Antrieb der Formwellen des Innenrings und eine Getriebestufe für den Antrieb der Formwellen des Außenrings, wobei die Übersetzungen der Getriebestufen derart gewählt sind, dass sich an den Formwellen des Innenrings und den Formwellen des Außenrings unterschiedliche Umfangsgeschwindigkeiten einstellen, um das Extrudat im Wesentlichen verzugsfrei durch die Umformeinrichtung zu fördern. Alternativ ist es zwar auch möglich, an den Formwellen von Innenring und Außenring die am Innenumfang und am Außenumfang der erzeugten Rohrwendel aufgrund der verschiedenen Durchmesser zwingend unterschiedlichen Umfangsgeschwindigkeiten nicht zu kompensieren, hier also keine Getriebestufen mit verschiedenen Übersetzungen einzusetzen. Dies führt indes zu einem gewissen Schlupf zwischen den Formwellen und dem Extrudat, der eine Verlangsamung der Produktion der Rohrwendel erfordern kann, um das Extrudat nicht zu beschädigen, weshalb diese Alternative weniger bevorzugt ist.

Im weiteren Verfolg des Erfindungsgedankens kann die Vorrichtung ferner der Umformeinrichtung im Materialfluss nachgeordnet einen Rohrwendelabzug umfassen, der zwei sich im Wesentlichen parallel zueinander erstreckende Abzugsrollen aufweist, die dazu angepasst sind, die Rohrwendel nach Verlassen der Umformeinrichtung drehend aufzulagern. Dies ist beispielsweise in der Endlosfertigung von sehr langen Rohrwendeln von Vorteil, weil die Umformeinrichtung insbesondere auch bei im Verhältnis schnellen Vorschubgeschwindigkeiten für die Rohrwendel durch den Rohrwendelabzug deutlich entlastet wird.

Vorzugsweise kann der Rohrwendelabzug schließlich einen Drehantrieb aufweisen, mittels dessen die Abzugsrollen entgegen der Drehrichtung der von der Umformeinrichtung abgegebenen Rohrwendel gleichsinnig drehend antreibbar sind. Durch geeignete Drehzahlwahl für den Antrieb der Abzugsrollen kann somit vorteilhaft der Ausziehprozess der Rohrwendel aus der Umformeinrichtung noch weiter unterstützt und beruhigt werden.

Weitere Merkmale, Eigenschaften und Vorteile des erfindungsgemäßen Verfahrens und der erfindungsgemäßen Vorrichtung zur Herstellung einer Rohrwendel aus einem thermoplastischen Kunststoff ergeben sich für den Fachmann aus der nachfolgenden Beschreibung eines bevorzugten Ausführungsbeispiels.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise schematischen Zeichnungen näher erläutert, in denen gleiche oder entsprechende Teile oder Abschnitte mit den gleichen Bezugszeichen versehen sind. In den Zeichnungen zeigen:
- Fig. 1: eine perspektivische Ansicht einer erfindungsgemäßen Vorrichtung zur Herstellung einer Rohrwendel aus einem thermoplastischen Kunststoff von schräg oben / vorne rechts, mit Blick auf ein rohrförmiges Extrudat, welches in einem plastisch formfähigen Zustand von einem Spritzkopf eines Extruders abgegeben und direkt durch eine Umformeinrichtung für die weitere Formgebung des Extrudats zu der Rohrwendel mit einem geometrisch definiert kalibrierten Profilquerschnitt heruntergezogen wird;
- Fig. 2: eine im Maßstab verkleinerte Draufsicht auf die Vorrichtung gemäß Fig. 1, zur weiteren Veranschaulichung der räumlichen Relativlage des Extruders und der Umformeinrichtung der Vorrichtung;
- Fig. 3: eine Vorderansicht der Vorrichtung gemäß Fig. 1 von unten in Fig. 2 und im Maßstab der Fig. 2;
- Fig. 4: eine im Maßstab vergrößerte Vorderansicht des vom Extruder getrennten Spitzkopfs der Vorrichtung gemäß Fig. 1;
- Fig. 5: eine nach unten und oben abgebrochene, im Maßstab gegenüber der Fig. 4 vergrößerte Schnittansicht des Spitzkopfs der Vorrichtung gemäß Fig. 1 entsprechend der Schnittverlaufslinie V-V in Fig. 4;
- Fig. 6: eine am Umfang abgebrochene Schnittansicht des Spitzkopfs der Vorrichtung gemäß Fig. 1 entsprechend der Schnittverlaufslinie VI-VI in Fig. 5 und im Maßstab der Fig. 5;
- Fig. 7: eine im Maßstab gegenüber der Fig. 3 vergrößerte Vorderansicht einer Baugruppe der Umformeinrichtung der Vorrichtung gemäß Fig. 1 in einem hiervon separierten Zustand, umfassend insbesondere ein Radialverteilergetriebe, welches über eine Anordnung von Teleskop-Kreuzgelenkwellen mit Formwellen der Umformeinrichtung antriebsverbunden ist, die ihrerseits drehbar an einem drehfesten Wellenhalter gelagert sind;
- Fig. 8: eine zu beiden Seiten abgebrochene, im Maßstab gegenüber der Fig. 7 vergrößerte Schnittansicht der dort gezeigten Baugruppe der Umformeinrichtung der Vorrichtung gemäß Fig. 1 entsprechend der einfach abgewinkelten Schnittverlaufslinie VIII-VIII in Fig. 7;
- Fig. 9: eine Schnittansicht des Radialverteilergetriebes der Vorrichtung gemäß Fig. 1 entsprechend der Schnittverlaufslinie IX-IX in Fig. 8, zur Veranschaulichung der beiden Getriebestufen des Radialverteilergetriebes, wobei mit gestrichelten Linien der Drehmomentverlauf und mit Pfeilen die Drehrichtungen der einzelnen Zahnräder angedeutet sind;
- Fig. 10: eine Schnittansicht des Radialverteilergetriebes der Vorrichtung gemäß Fig. 1 entsprechend der Schnittverlaufslinie X-X in Fig. 8, zur weiteren Veranschaulichung der beiden Getriebestufen des Radialverteilergetriebes, wobei wiederum mit gestrichelten Linien der Drehmomentverlauf und mit Pfeilen die Drehrichtungen der einzelnen Zahnräder angedeutet sind;
- Fig. 11: eine perspektivische Ansicht von schräg oben, seitlich rechts auf den Wellenhalter mit den Formwellen der in Fig. 7 gezeigten Baugruppe der Umformeinrichtung der Vorrichtung gemäß Fig. 1 in einem hiervon getrennten Zustand, wobei in einem oberen Bereich von Fig. 11 das sich in dem plastisch formfähigen Zustand befindende rohrförmige Extrudat zu beiden Seiten abgebrochen angedeutet ist, wie es in die Umformeinrichtung eintritt, und Pfeile die Drehrichtungen der einzelnen Formwellen anzeigen;
- Fig. 12: eine Draufsicht auf den in Fig. 11 isoliert gezeigten Wellenhalter mit den Formwellen der Umformeinrichtung der Vorrichtung gemäß Fig. 1, insbesondere zur Veranschaulichung einer Verkippung der Formwellen bezüglich einer Mittelachse des Wellenhalters und deren erneut durch Pfeile angezeigten Drehrichtungen, wobei in einem oberen Bereich von Fig. 12 wiederum das in die Umformeinrichtung eintretende, sich in dem plastisch formfähigen Zustand befindende rohrförmige Extrudat zu beiden Seiten abgebrochen angedeutet ist;
- Fig. 13: eine einfach unterbrochene Seitenansicht einer nach dem erfindungsgemäßen Verfahren hergestellten Rohrwendel aus einem thermoplastischen Kunststoff, die einen kreisringförmigen Profilquerschnitt aufweist;
- Fig. 14: eine im Maßstab vergrößerte, zu beiden Seiten abgebrochene Schnittansicht der Rohrwendel gemäß Fig. 13 entsprechend der Schnittverlaufslinie XIV-XIV in Fig. 13, zur Veranschaulichung des kreisringförmig kalibrierten Profilquerschnitts der Rohrwendel; und
- Fig. 15: eine im Schnittverlauf der Fig. 14 entsprechende Schnittansicht einer in herkömmlicher Weise aus einem thermoplastischen Kunststoff hergestellten Rohrwendel, zur Veranschaulichung des hierbei resultierenden, im Wesentlichen ovalen Profilquerschnitts der Rohrwendel.

### DETAILLIERTE BESCHREIBUNG DES AUSFÜHRUNGSBEISPIELS

In den Figuren 1 bis 3 ist eine Vorrichtung zur Herstellung einer Rohrwendel RW aus einem thermoplastischen Kunststoff mit dem Bezugszeichen 10 beziffert. Die Vorrichtung 10 umfasst allgemein einen Extruder 12 mit einem nachfolgend noch näher beschriebenen Spritzkopf 14, der gemäß den Fig. 4 und 5 einen ringförmigen Düsenspalt 16 aufweist, über den ein rohrförmiges Extrudat EX in einem plastisch formfähigen Zustand abgegeben werden kann. Ferner weist die Vorrichtung 10 eine im Folgenden ebenfalls noch ausführlich diskutierte Umformeinrichtung 18 für die weitere Formgebung des plastisch formfähigen, rohrförmigen Extrudats EX zu der Rohrwendel RW mit einem geometrisch definiert kalibrierten Profilquerschnitt PQ (vgl. Fig. 14) auf. Wichtige Merkmale der Vorrichtung 10 bestehen hierbei darin, dass die angetriebene Umformeinrichtung 18 so bezüglich des Spitzkopfs 14 des Extruders 12 angeordnet ist, dass sie das rohrförmige Extrudat EX im plastisch formfähigen Zustand direkt vom ringförmigen Düsenspalt 16 des Spritzkopfs 14 herunterziehen kann, d.h. unmittelbar bevor die Kalibrierung des Profilquerschnitts PQ des Rohrs und dessen Umformung zu der Rohrwendel RW erfolgt.

Was die weiteren Baugruppen der Vorrichtung 10 in allgemeiner Form angeht, sind in den Fig. 1 bis 3 noch eine Kühleinrichtung 20 für die Rohrwendel RW und ein Rohrwendelabzug 22 dargestellt. Die Kühleinrichtung 20 der Vorrichtung 10 ist im Bereich der Umformeinrichtung 18 vorgesehen und dient der Abgabe eines Kühlfluids, hier Wasser, um das durch die Umformeinrichtung 18 geförderte Extrudat EX aktiv zu kühlen. Der Rohrwendelabzug 22 der Vorrichtung 10 hingegen ist der Umformeinrichtung 18 im Materialfluss nachgeordnet vorgesehen und weist zwei sich im Wesentlichen parallel zueinander erstreckende Abzugsrollen 24 auf, die dazu angepasst sind, die Rohrwendel RW nach Verlassen der Umformeinrichtung 18 drehend aufzulagern.

Bei dem Extruder 12 handelt es sich im dargestellten Ausführungsbeispiel um einen an bzw. in einem Grundgestell 26 montierten, an sich bekannten Schneckenextruder, mit einem Schneckenzylinder 28 zur Aufnahme einer Extruderschnecke 30 (siehe die Fig. 1 und 2), die über (u.a.) ein in einer Drucklagerglocke 32 aufgenommenes Drucklager (in den Figuren nicht zu sehen) drehbar gelagert ist und mittels eines Getriebemotors 34 drehend angetrieben werden kann. Nahe der Drucklagerglocke 32 ist der Schneckenzylinder 28 mit einer Befüllöffnung 36 versehen, an die sich z.B. ein Befülltrichter (nicht gezeigt) für die Zufuhr des zu verarbeitenden Kunststoffmaterials anschließen kann.

Das thermoplastische Kunststoffmaterial, im vorliegenden Fall z.B. ein Polyamid (PA), wie PA 12 oder PA 6, oder alternativ ein Polyethylen (PE) oder Polyurethan-Elastomer (PUR), wird in dem Schneckenzylinder 28 bzw. an der Extruderschnecke 30 des Extruders 12 bei Temperaturen aufgeschmolzen, die rund 20° über dem Schmelzpunkt des jeweiligen Materials liegen. Hierfür kommt eine Heiz-Kühl-Kombination 38 zum Einsatz, deren Heizbänder am Außenumfang des Schneckenzylinders 28 angeordnet sind. Das Bezugszeichen 40 beziffert in den Fig. 1 bis 3 einen Kabelkanal für die Energiezufuhr zu der Heiz-Kühl-Kombination 38.

Im Schneckenzylinder 28 weist der Extruder 12 entlang der Extruderschnecke 30 in an sich bekannter Weise unterschiedliche Funktionszonen auf, nämlich eine sich an die Befüllöffnung 36 anschließende Einzugszone, die in eine mittlere Kompressionszone übergeht, an welche sich wiederum eine Ausstoßzone anschließt, die mit dem Spritzkopf 14 endet, über dessen Düsenspalt 16 das Extrudat EX vom Extruder 12 heruntergezogen werden kann. Zu weiteren Details des Spritzkopfs 14 wird nachfolgend auf die Fig. 4 bis 6 Bezug genommen.

Der Spritzkopf 14 hat einen Grundkörper 42, der in einer zentralen Gewindebohrung 44 eines ringförmigen Flanschteils 46 eingeschraubt ist, über das der Spritzkopf 14 an dem Schneckenzylinder 28 angeflanscht ist. Am Außenumfang des Flanschteils 46 ist in Fig. 4 ein Heizband 48 der Heiz-Kühl-Kombination 38 zu erkennen. Hierbei ist der Spritzkopf 14 an einer Ausgangsöffnung (nicht gezeigt) des Schneckenzylinders 28 über einen Zentrierring 50 angeschlossen, an dem sich ein sich am Innenumfang verjüngender Spritzkopfeinlauf 52 anschließt, der mit einem Distanzring 54 in einer Stufenbohrung 56 des Grundkörpers 42 aufgenommen ist.

Am vom Flanschteil 46 abgewandten Ende des Grundkörpers 42 ist am Grundkörper 42 ein Düsenhalter 58 befestigt, der zusammen mit dem Grundkörper 42 einen Innenraum 60 zur Aufnahme eines Stegdornhalters 62 und einer Außendüse 64 des Spritzkopfs 14 begrenzt. Auf dem Stegdornhalter 62 ist eine Innendüse 66 des Spritzkopfs 14 aufgeschraubt, die zusammen mit der Außendüse 64 den ringförmigen Düsenspalt 16 des Spritzkopfs 14 bildet. Ein Außendurchmesser des Stegdornhalters 62 ist geringfügig kleiner als ein Innendurchmesser des Innenraums 60 im Bereich des Grundkörpers 42, so dass der Stegdornhalter 62 im Innenraum 60 radial bewegt und damit zentriert werden kann. Zu diesem Zweck sind im dargestellten Ausführungsbeispiel vier gleichmäßig über dem Umfang verteilte Zentrierschrauben 68 vorgesehen, die in zugeordneten Gewindebohrungen des Grundkörpers 42 eingeschraubt sind und diese durchgreifen, um mit dem Außenumfang des Stegdornhalters 62 in Kontakt zu treten. Für den Fachmann ist ersichtlich, dass der Stegdornhalter 62 mittels der Zentrierschrauben 68 im Innenraum 60 in einer Radialstellung fixiert werden kann, in der die Außendüse 64 und die Innendüse 66 ausgefluchtet sind, um eine exakte Kreisringform des Düsenspalts 16 des Spritzkopfs 14 einzustellen.

Gemäß Fig. 6 weist der Stegdornhalter 62 ferner vier durch Stege voneinander getrennte, kreisringsegmentförmige Durchbrüche 70 auf. Über die Durchbrüche 70 kann das vom Schneckenzylinder 28 durch den Spritzkopfeinlauf 52, den Distanzring 54 und die Stufenbohrung 56 im Grundkörper 42 zugeleitete, plastisch formfähige Extrudat EX an den Ringraum zwischen der Innendüse 66 und der Außendüse 64 und damit den Düsenspalt 16 des Spritzkopfs 14 weitergeleitet werden.

Des Weiteren hat der Stegdornhalter 62 eine zentrale Sackbohrung 72, die gemäß Fig. 5 über eine Querbohrung 74 im Stegdornhalter 62 mit einer quer im Grundkörper 42 eingebrachten Anschlussbohrung 76 in Fluidverbindung steht. Außerdem steht die Sackbohrung 72 des Stegdornhalters 62 mit einer zentralen Stützluftbohrung 78 des Spritzkopfs 14, genauer der Innendüse 66 des Spritzkopfs 14 in Fluidverbindung. Diese Stützluftbohrung 78 wiederum mündet an einer Stirnfläche 80 des Spritzkopfs 14 radial innerhalb des ringförmigen Düsenspalts 16, wie am besten in Fig. 5 zu erkennen ist. Somit ist es möglich, an den Spritzkopf 14 eine ggf. druckgeregelte Druckluftquelle 82 (in den Fig. 1 bis 3 schematisch angedeutet) anzuschließen, um über die Stützluftbohrung 78 des Spritzkopfs 14 das von dem Düsenspalt 16 heruntergezogene, plastisch formfähige Extrudat EX mit einem gewissen Innendruck, z.B. 50 mbar zu beaufschlagen.

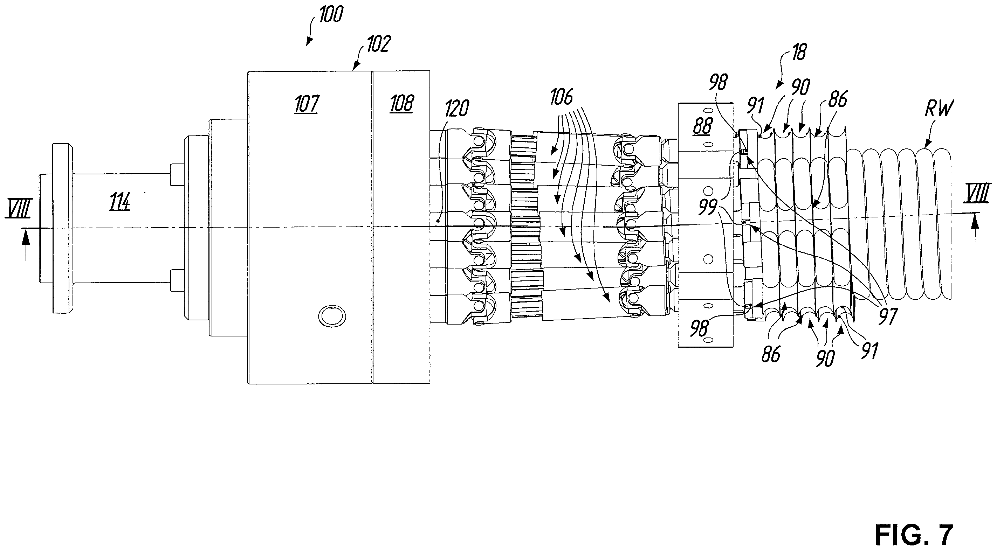

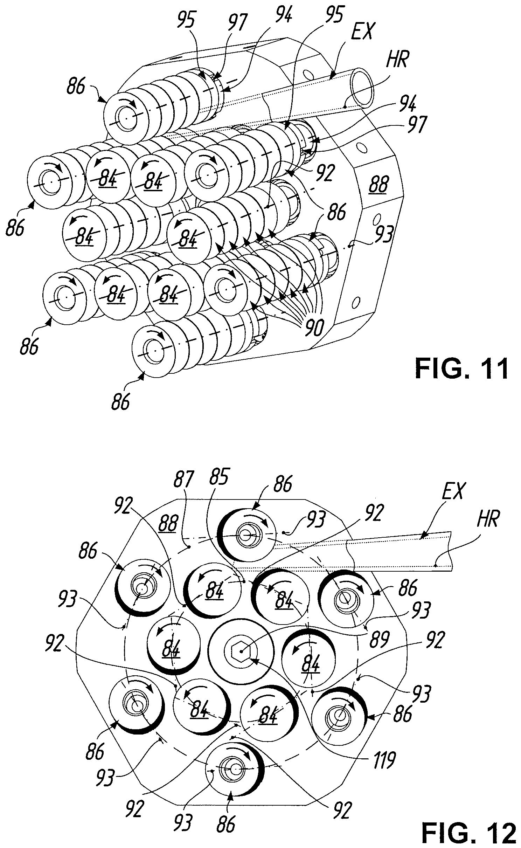

Weitere Einzelheiten der Umformeinrichtung 18 sind insbesondere den Fig. 7 bis 12 zu entnehmen. Wie am besten in den Fig. 11 und 12 zu erkennen ist, weist die Umformeinrichtung 18 zunächst eine Mehrzahl von drehend antreibbaren Formwellen 84, 86 auf, die derart an einem drehfesten Wellenhalter 88 angeordnet sind, dass sie einen Innenring 85 von - im dargestellten Ausführungsbeispiel sechs - inneren Formwellen 84 und einen Außenring 87 von - im gezeigten Ausführungsbeispiel ebenfalls sechs - äußeren Formwellen 86 bilden, was in Fig. 12 durch gestrichelte Linien angedeutet ist. Hierbei sind die Formwellen 84 des Innenrings 85 entsprechend den Drehpfeilen in den Fig. 11 und 12 gegenläufig zu den Formwellen 86 des Außenrings 87 antreibbar, um das plastisch formfähige, rohrförmige Extrudat EX zwischen dem Innenring 85 und dem Außenring 87 zu fördern. Mit anderen Worten gesagt, drehen im Blickwinkel der Fig. 11 und 12 die angetriebenen Formwellen 84 des Innenrings 85 jeweils entgegen dem Uhrzeigersinn, während die angetriebenen Formwellen 86 des Außenrings 87 jeweils im Uhrzeigersinn drehen.

In Fig. 12 ist auch gut zu erkennen, dass die Formwellen 84 des Innenrings 85 und die Formwellen 86 des Außenrings 87 auf ihrem jeweiligen Ring um eine Mittelachse 89 des Wellenhalters 88 gleichmäßig voneinander winkelbeabstandet sind, nämlich um jeweils 60°. Dabei sind die Formwellen 84 des Innenrings 85 relativ zu den Formwellen 86 des Außenrings 87 um die Mittelachse 89 des Wellenhalters 88 um 30° winkelversetzt angeordnet, so dass eine jede Formwelle 84 des Innenrings 85 "auf Lücke" bezüglich der benachbarten zwei Formwellen 86 des Außenrings 87 sitzt.

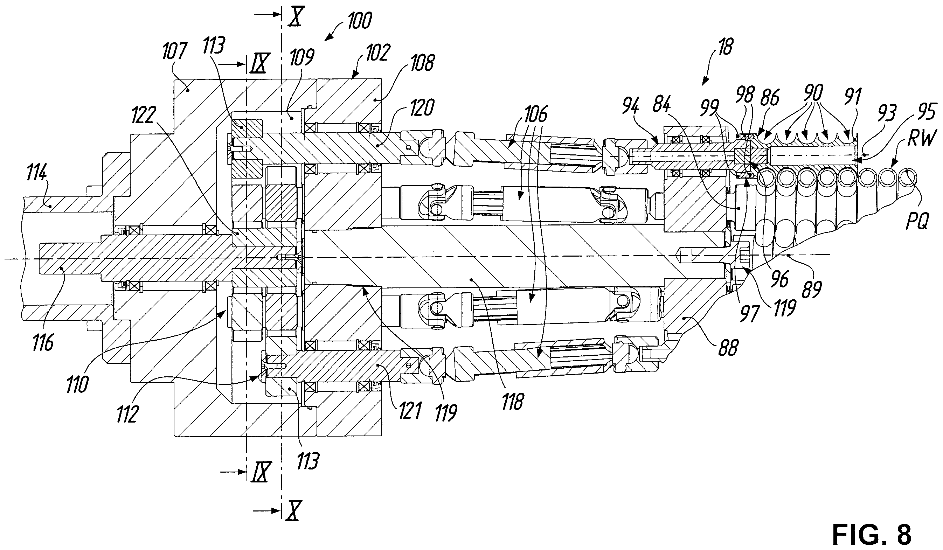

Jede Formwelle 84, 86 weist ferner eine Mehrzahl von - im dargestellten Ausführungsbeispiel fünf - formgebenden Radialnuten 90 mit einem geometrisch definierten Nutquerschnitt 91 auf, die entlang einer Mittelachse 92, 93 der jeweiligen Formwelle 84, 86 gesehen geringfügig beabstandet voneinander hintereinander angeordnet sind, wie am besten in den Fig. 8 und 11 zu sehen ist. Im dargestellten Ausführungsbeispiel weisen die formgebenden Radialnuten 90 der Formwellen 84, 86 jeweils einen im Wesentlichen halbkreisförmigen Nutquerschnitt 91 auf.

Wie weiterhin am besten in den Fig. 7, 11 und 12 zu erkennen ist, sind die Formwellen 84, 86 bezüglich des Wellenhalters 88 hinsichtlich Axialabstand und Kippwinkel untereinander unterschiedlich angeordnet bzw. ausgerichtet. Zum einen stehen die Formwellen 84, 86 entsprechend der Steigung der herzustellenden Rohrwendel RW unterschiedlich weit von dem Wellenhalter 88 vor (vgl. Fig. 7 die Darstellung rechts und links vom Wellenhalter 88). Zum anderen sind im dargestellten Ausführungsbeispiel die Formwellen 84, 86 ebenfalls entsprechend der Steigung der herzustellenden Rohrwendel RW mit ihren Mittelachsen 92, 93 bezüglich der Mittelachse 89 des Wellenhalters 88 verkippt (siehe insbesondere die Fig. 11 und 12).

Im Ergebnis bilden die Formwellen 84, 86 mit ihren formgebenden Radialnuten 90 eine im Wesentlichen spiralförmige Bahn für das plastisch formfähige, rohrförmige Extrudat EX. Hierbei sind die Axialabstände und Kippwinkel der Formwellen 84, 86 relativ zum Wellenhalter 88 bzw. dessen Mittelachse 89 so gewählt, dass ein Abschnitt des entlang der spiralförmigen Bahn geförderten Extrudats EX auf einem Umlauf um die Mittelachse 89 des Wellenhalters 88 in den vom Wellenhalter 88 aus gesehen ersten Radialnuten 90 der Formwellen 84, 86 gefördert wird bzw. verläuft, bevor dieser Abschnitt des Extrudats EX für den zweiten Umlauf um die Mittelachse 89 des Wellenhalters 88 an die vom Wellenhalter 88 aus gesehen zweiten Radialnuten 90 der Formwellen 84, 86 ohne Stufe oder Knick übergeben wird. Dort wird dieser Abschnitt dann weiter gefördert, bis er für den nächsten Umlauf an die vom Wellenhalter 88 aus gesehen nächsten Radialnuten 90 der Formwellen 84, 86 übergeben wird, usw.; erst nach Durchlaufen der letzten, hier fünften Radialnuten 90 der Formwellen 84, 86 verlässt das zur Rohrwendel RW erstarrte Extrudat EX die durch die Formwellen 84, 86 gebildete Spiralbahn, wie in Fig. 7 rechts gezeigt.

Im dargestellten Ausführungsbeispiel sind des Weiteren die Formwellen 86 des Außenrings 87 jeweils mehrteilig ausgebildet, wie in Fig. 8 zu sehen ist, mit einem im Wellenhalter 88 drehbar gelagerten Wellenstumpf 94 und einem daran lösbar anbringbaren Wellensegment 95, welches die formgebenden Radialnuten 90 der Formwelle 86 aufweist. Dabei hat jede mehrteilig ausgebildete Formwelle 86 des Außenrings 87 eine magnetische Kupplung 96, die dazu dient, das jeweilige Wellensegment 95 lösbar am zugeordneten Wellenstumpf 94 zu halten.

Zudem sind das Wellensegment 95 und der Wellenstumpf 94 jeder mehrteiligen Formwelle 86 des Außenrings 87 mit komplementär ausgebildeten Strukturen 97 versehen, die zur Drehmomentübertragung formschlüssig miteinander in Eingriff gebracht werden können. Im dargestellten Ausführungsbeispiel sind die komplementären Strukturen 97 an Wellenstumpf und -segment 94, 95 durch zwei Stifte 98 an dem einen Teil (hier das Wellensegment 95) und nach radial außen offene Ausnehmungen 99 oder Axialnuten an dem anderen Teil (hier der Wellenstumpf 94) gebildet, die im montierten Zustand der jeweiligen mehrteilig ausgebildeten Formwelle 86 des Außenrings 87 ineinandergreifen.

Was im Übrigen die in den Zeichnungen nicht dargestellte drehbare Lagerung der einteiligen Formwellen 84 des Innenrings 85 im Wellenhalter 88 angeht, so ist diese in analoger Weise wie die Lagerung der Wellenstümpfe 94 der Formwellen 86 des Außenrings 87 ausgebildet. Demgemäß erstrecken sich die Formwellen 84 des Innenrings 85 in starrer Ausrichtung von dem Wellenhalter 88 weg.

Für den Drehantrieb der Formwellen 84 des Innenrings 85 und der Formwellen 86 des Außenrings 87 ist im dargestellten Ausführungsbeispiel eine gemeinsame Antriebseinrichtung 100 vorgesehen, die nachfolgend unter Bezugnahme auf die Fig. 7 bis 10 näher beschrieben werden soll. Allgemein betrachtet umfasst die Antriebseinrichtung 100 gemäß den Fig. 1 bis 3 ein Radialverteilergetriebe 102, einen Elektromotor 104 zum Antrieb des Radialverteilergetriebes 102 und eine Anordnung von handelsüblichen Teleskop-Kreuzgelenkwellen 106, welche die Antriebsverbindung zu den am bzw. im Wellenhalter 88 gelagerten Formwellen 84, 86 herstellen. Hiervon ist das Radialverteilergetriebe 102 an einem Gestell 103 aufgeständert und trägt somit mittelbar die übrigen Komponenten und Baugruppen der Umformeinrichtung 18 und der zugeordneten Antriebseinrichtung 100, wie sich aus der nachfolgenden Beschreibung noch ergibt.

Das Radialverteilergetriebe 102 als Herzstück der Antriebseinrichtung 100 hat gemäß den Fig. 7 und 8 zunächst eine eingangsseitige Gehäusehälfte 107 und eine ausgangsseitige Gehäusehälfte 108, die zusammen einen Innenraum 109 zur Aufnahme der Zahnräder 111, 113 von zwei Getriebestufen 110, 112 des Radialverteilergetriebes 102 begrenzen, nämlich einer ersten Getriebestufe 110 für den Antrieb der Formwellen 84 des Innenrings 85 (Zahnräder 111) und einer zweiten Getriebestufe 112 für den Antrieb der Formwellen 86 des Außenrings 87 (Zahnräder 113). An der eingangsseitigen Gehäusehälfte 107 des Radialverteilergetriebes 102 ist der Elektromotor 104 der Antriebseinrichtung 100 über eine Adapterglocke 114 angeflanscht. Ferner ist gemäß Fig. 8 an einer zentralen Stelle der eingangsseitigen Gehäusehälfte 107 eine Eingangswelle 116 des Radialverteilergetriebes 102 drehbar gelagert, die mit dem Elektromotor 104, genauer einer Abtriebswelle (nicht gezeigt) des Elektromotors 104 in Antriebsverbindung steht.

Die Fig. 8 zeigt auch, dass an einer zentralen Stelle der ausgangsseitigen Gehäusehälfte 108 des Radialverteilergetriebes 102 der Wellenhalter 88 unter Zuhilfenahme einer Verbindungsstange 118 und zugeordneter Befestigungsmittel 119 (Gewindeverbindung an der ausgangsseitigen Gehäusehälfte 108 / Stangenabsatz mit Scheibe und Schraube am Wellenhalter 88) befestigt ist. Um die Verbindungsstange 118 herum sind in der ausgangsseitigen Gehäusehälfte 108 entsprechend der Anzahl der Formwellen 84, 86 der Umformeinrichtung 18 - im dargestellten Ausführungsbeispiel also insgesamt zwölf - Ausgangswellen 120, 121 drehbar gelagert. Die Ausgangswellen 120, 121 stehen ihrerseits über je eine der Teleskop-Kreuzgelenkwellen 106 mit jeweils einer Formwelle 84, 86 der Umformeinrichtung 18 in Antriebsverbindung, wie in Fig. 8 rechts oben und unten dargestellt ist.

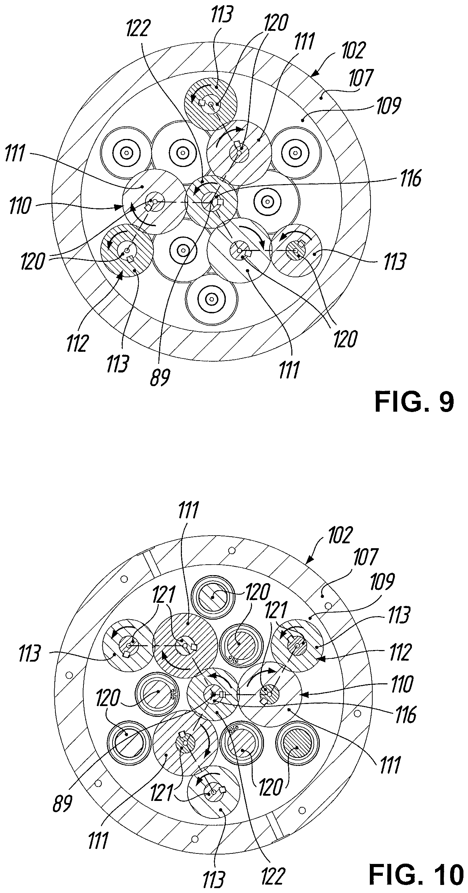

Der Fig. 8 ist weiterhin zu entnehmen, dass es längere Ausgangswellen 120 und kürzere Ausgangswellen 121 gibt, von denen die längeren Ausgangswellen 120 bis in eine erste Getriebeebene entsprechend der Schnittverlaufslinie IX-IX in Fig. 8 reichen, während die kürzeren Ausgangswellen 121 sich lediglich bis in eine zweite Getriebeebene entsprechend der Schnittverlaufslinie X-X in Fig. 8 erstrecken. Im Innenraum 109 des Radialverteilergetriebes 102 sind an den Ausgangswellen 120, 121 die jeweils zugeordneten Zahnräder 111, 113 der ersten Getriebestufe 110 bzw. der zweiten Getriebestufe 112 über formschlüssige Welle-Nabe-Verbindungen mit Passfedern befestigt, wie in den Fig. 9 und 10 gezeigt.

Gemäß den Fig. 8 bis 10 ist an dem sich in den Innenraum 109 des Radialverteilergetriebes 102 hineinragenden Ende der Eingangswelle 116 ein zentrales Ritzel 122 befestigt, und zwar ebenfalls über eine formschlüssige Welle-Nabe-Verbindung mit einer Passfeder. Hierbei erstreckt sich das Ritzel 122 im Innenraum 109 axial über beide Getriebeebenen. Gemäß den Fig. 9 und 10 kämmt das Ritzel 122 in beiden Getriebeebenen mit jeweils drei bezogen auf die Mittelachse 89 gleichmäßig über dem Umfang verteilten größeren Zahnrädern 111 der ersten Getriebestufe 110 für den Antrieb der Formwellen 84 des Innenrings 85, wobei die drei größeren Zahnräder 111 der ersten Getriebeebene bezüglich der drei größeren Zahnräder 111 der zweiten Getriebeebene um die Mittelachse 89 um 30° winkelversetzt angeordnet sind. Jedes der größeren Zahnräder 111 der ersten Getriebestufe 110 kämmt wiederum in der jeweiligen Getriebeebene mit jeweils einem kleineren Zahnrad 113 der zweiten Getriebestufe 112 für den Antrieb der Formwellen 86 des Außenrings 87. Auch die drei kleineren Zahnräder 113 jeder Getriebeebene sind in der jeweiligen Getriebeebene bezogen auf die Mittelachse 89 gleichmäßig über dem Umfang verteilt, und zwar wiederum von Getriebeebene zu Getriebeebene um die Mittelachse 89 um 30° winkelversetzt.

Die Drehmomentverteilung von der zentralen Eingangswelle 116 auf die verschiedenen Ausgangswellen 120, 121 des Radialverteilergetriebes 102 ist in den Fig. 9 und 10 mit gestrichelten Linien angedeutet; Pfeile markieren in den Fig. 9 und 10 ferner die Drehrichtungen der verschiedenen Ritzel 122 bzw. Zahnräder 111, 113. Für den Fachmann ist ersichtlich, dass infolge der unterschiedlichen Größe der Zahnräder 111, 113 die Übersetzungen der zwei Getriebestufen 110, 112 des Radialverteilergetriebes 102 verschieden sind, wodurch sich die Formwellen 84 des Innenrings 85 langsamer drehen als die Formwellen 86 des Außenrings 87. Mit anderen Worten gesagt sind die Übersetzungen der beiden Getriebestufen 110, 112 derart gewählt, dass sich an den Formwellen 84 des Innenrings 85 und den Formwellen 86 des Außenrings 87 unterschiedliche Umfangsgeschwindigkeiten einstellen, um das Extrudat EX im Wesentlichen verzugsfrei durch die Umformeinrichtung 18 zu fördern. Dies ist dann gegeben, wenn sich in einem Querschnitt des Extrudats EX gesehen jeder Punkt des Extrudats EX im Wesentlichen mit derselben Winkelgeschwindigkeit um die Mittelachse 89 bewegt, wobei naturgemäß radial innen liegende Punkte des Extrudats EX einen kleineren Weg zurücklegen als radial außen liegende Punkte des Extrudats EX. Dem tragen die Übersetzungen der beiden Getriebestufen 110, 112 des Radialverteilergetriebes 102 so Rechnung, dass die Umfangsgeschwindigkeit radial außen am Extrudat EX größer ist als die Umfangsgeschwindigkeit radial innen am Extrudat EX.

Wie weiter oben unter Bezugnahme auf die Fig. 1 bis 3 bereits erwähnt, ist im Bereich der Umformeinrichtung 18 der Vorrichtung 10 die Kühleinrichtung 20 vorgesehen. Im dargestellten Ausführungsbeispiel umfasst die Kühleinrichtung 20 ein am Gestell 103 aufgelagertes Wasserbecken 124. Aus dem Wasserbecken 124 kann mittels einer Pumpe (nicht gezeigt) Wasser gefördert und durch einen Düsenhalter 126 hindurch an eine Mehrzahl von in Fig. 1 gezeigten, am Düsenhalter 126 montierten Düsen 128 weitergeleitet werden.

Die im dargestellten Ausführungsbeispiel fünf Düsen 128 der Kühleinrichtung 20 sind gemäß Fig. 1 bezüglich der Mittelachse 89 im Wesentlichen radial ausgerichtet und decken dabei in ihrer Auffächerung einen Winkelbereich von ca. 120° um die Mittelachse 89 ab. Was die axiale Position der Düsen 128 angeht, sitzen diese gemäß den Fig. 2 und 3 in unmittelbarer Nähe des Wellenhalters 88, so dass sie Wasser schon im Bereich der vom Wellenhalter 88 aus gesehen ersten Radialnuten 90 der Formwellen 84, 86 auf das Extrudat EX abzugeben vermögen.

Den Fig. 1 bis 3 sind schließlich auch weitere Details des schon eingangs erwähnten Rohrwendelabzugs 22 zu entnehmen. Demgemäß weist der Rohrwendelabzug 22 einen Drehantrieb 130 auf, mittels dessen die Abzugsrollen 24 entgegen der Drehrichtung der von der Umformeinrichtung 18 abgegebenen Rohrwendel RW gleichsinnig drehend angetrieben werden können. Der Drehantrieb 130 hat hierfür im dargestellten Ausführungsbeispiel einen an einem Gestellteil 132 montierten Elektromotor 134, der mit den Abzugsrollen 24 über einen Riementrieb 136 antriebsverbunden ist, welcher Riemenscheiben am Motorausgang und an den Enden der Abzugsrollen 24 sowie einen dazwischen verlaufenden Zahnriemen umfasst. Durch eine geeignete Einstellung der Drehzahl des Elektromotors 134 des Drehantriebs 130 können die Abzugsrollen 24 des Rohrwendelabzugs 22 mit einer jeweiligen Umfangsgeschwindigkeit angetrieben werden, die der Umfangsgeschwindigkeit am Außenumfang der aus der Umformeinrichtung 18 geförderten Rohrwendel RW entspricht oder sogar geringfügig größer ist als Letztere, so dass die Rohrwendel RW beim Verlassen der Spiralbahn zwischen den Formwellen 84, 86 mit einem In-Kontakt-Treten mit den Abzugsrollen 24 senkrecht zum Profilquerschnitt PQ einen gewissen Zug erfährt.

Für den Fachmann ist ersichtlich, dass mit der vorbeschriebenen Vorrichtung 10 ein Verfahren zur Herstellung einer Rohrwendel RW aus einem thermoplastischen Kunststoff durchführbar ist, bei dem zwei Formgebungsschritte unmittelbar aufeinander folgen. Dabei wird allgemein gesagt (1.) in einem ersten Formgebungsschritt das rohrförmige Extrudat EX über den ringförmigen Düsenspalt 16 des Extruders 12 extrudiert, worauf (2.) in einem zweiten Formgebungsschritt direkt im Anschluss an den ersten Formgebungsschritt das vom Düsenspalt 16 heruntergezogene, noch plastisch formfähige Extrudat EX in der Umformeinrichtung 18 zur Erzielung des geometrisch definierten Profilquerschnitts PQ kalibriert sowie zu der Rohrwendel RW umgeformt wird, bevor die Rohrwendel RW mit dem geometrisch bestimmten Profilquerschnitt PQ erstarrt. Letzterer besitzt, was die Maß- und Formhaltigkeit angeht, im Vergleich zum eingangs geschilderten Stand der Technik sehr geringe Maß- und Formtoleranzen (siehe hierzu auch die Fig. 14 und 15 im Vergleich). Im dargestellten Ausführungsbeispiel wird das noch plastisch formfähige Extrudat EX für den zweiten Formgebungsschritt in der Umformeinrichtung 18 der Vorrichtung 10 mittels der hierfür speziell angetriebenen Umformeinrichtung 18 direkt vom Düsenspalt 16 des Extruders 12 heruntergezogen.

Durch die besondere Ausgestaltung des Spritzkopfs 14 der Vorrichtung 10 mit der an die Druckluftquelle 82 angeschlossenen Stützluftbohrung 78 erfolgt ferner das Kalibrieren des noch plastisch formfähigen Extrudats EX in der Umformeinrichtung 18 unter der Zufuhr von Stützluft durch einen Hohlraum HR (siehe die Fig. 11 und 12) des Extrudats EX.

Während des zweiten Formgebungsschritts zur Ausbildung der Rohrwendel RW mit dem geometrisch definiert kalibrierten Profilquerschnitt PQ ist es darüber hinaus möglich, das Extrudat EX in der Umformeinrichtung 18 aktiv zu kühlen. Im dargestellten Ausführungsbeispiel wird zur aktiven Kühlung des Extrudats EX in der Umformeinrichtung 18 ein flüssiges Kühlmittel, nämlich Wasser verwendet, welches von der Kühleinrichtung 20 auf das durch die Umformeinrichtung 18 geförderte Extrudat EX abgegeben wird. Hierbei gelangt das aus dem Wasserbecken 124 angesaugte Wasser über die am Düsenhalter 126 ausgerichtet befestigten Düsen 128 direkt auf das durch die Formwellen 84, 86 geförderte Extrudat EX. Da die Umformeinrichtung 18 oberhalb des Wasserbeckens 124 der Kühleinrichtung 20 platziert ist, tropft bzw. fließt das auf das Extrudat EX abgegebene Wasser in einem Kreislauf zurück in das Wasserbecken 124. Im bzw. am Wasserbecken 124 können zusätzliche Maßnahmen vorgesehen sein (in den Figuren nicht gezeigt), um das umlaufende Wasser zu temperieren, zum Beispiel eine Kompressorkühlung.

Die vorbeschriebene Mehrteiligkeit der Formwellen 86 des Außenrings 87 erleichtert vor allem das Anfahren der Produktion der Rohrwendel RW. Beim Anfahren sind zunächst die Wellensegmente 95 der äußeren Formwellen 86 noch nicht auf den zugeordneten Wellenstümpfen 94 aufgesetzt. Das aus dem Düsenspalt 16 des Extruders 12 austretende, plastisch formfähige, rohrförmige Extrudat EX wird direkt um die sich jeweils um die eigene Mittelachse 92 drehenden Formwellen 84 des Innenrings 85 der Ringform folgend gelegt. Dabei folgt das Extrudat EX auch der sich aus der vorbeschriebenen Anordnung bzw. Ausrichtung der formenden Radialnuten 90 der Formwellen 84 ergebenden Steigung, d.h. es bildet eine Spirale bzw. Wendel. Durch die nun eingeschaltete Wasserkühlung vermittels der Kühleinrichtung 20 entsteht eine der Ringform folgende Umschlingung der Formwellen 84 des Innenrings 85, wobei die Umformeinrichtung 18 das Extrudat EX weiterfördert. Jetzt werden reihum die Wellensegmente 95 an den zugeordneten Wellenstümpfen 94 der Formwellen 86 des Außenrings 87 angesetzt sowie ggf. der Druck der von der Druckluftquelle 82 erzeugten und über die Stützluftbohrung 78 in den Hohlraum HR des Extrudats EX abgegebenen Stützluft soweit erhöht, bis das Extrudat EX vollständigen Kontakt mit den Formwellen 84 des Innenrings 85 sowie den Formwellen 86 des Außenrings 87 hat und folglich entsprechend der Geometrie der Radialnuten 90 einen runden Profilquerschnitt PQ ohne Ovalität ausbildet. Mit anderen Worten gesagt wird hier das noch plastisch formfähige Extrudat EX in dem zweiten Formgebungsschritt zur Erzielung des im Wesentlichen kreisringförmigen Profilquerschnitts PQ gemäß dem dargestellten Ausführungsbeispiel kalibriert und zugleich in die Wendelform gebracht.

Ein weiterer Vorteil der geteilten Formwellen 86 des Außenrings 87 besteht in der damit erzielten Arbeitssicherheit. Da sich die Formwellen 84 des Innenrings 85 und die Formwellen 86 des Außenrings 87 entsprechend den Pfeilen in den Fig. 11 und 12 gegenläufig drehen, besteht grundsätzlich die Gefahr, dass z.B. Finger der Bedienperson in den Zwischenraum zwischen den Formwellen 84, 86 gezogen werden. Falls dies passiert, kann infolge der geteilten Ausführung der Formwellen 86 das angesetzte Wellensegment 95 bezüglich des zugeordneten Wellenstumpfs 94 einfach auslenken. Dieser Effekt ist auch bei der Produktion sehr hilfreich, weil bei etwaigen Verdickungen im Extrudat EX die Wellensegmente 95 ausweichen können, bevor sie infolge der vorgesehenen magnetischen Kupplungen 96 selbsttätig in ihre Ausgangslage zurückkehren, so dass die Umformeinrichtung 18 nicht verstopft oder gar beschädigt wird.

Nach Verlassen der Umformeinrichtung 18 wird die erstarrte Rohrwendel RW in einem ersten Konfektionierungsschritt definiert abgelängt. Dies kann manuell oder automatisiert erfolgen.

So kann im Bereich des Rohrwendelabzugs 22 oder in Richtung des Materialflusses gesehen dahinter - je nach der gewünschten Länge der zunächst endlos produzierten Rohrwendel RW - eine Trenn- oder Schneidvorrichtung (nicht gezeigt) vorgesehen sein. In dieser wird die Rohrwendel RW zunächst geeignet auseinandergezogen oder aufgespreizt, damit ein Trenn- oder Schneidwerkzeug in Form einer Zange, einer Schere, eines Guillotine-Messers mit Anlage bzw. Gegenschneide od.dgl. an eine Windung der Rohrwendel RW angelegt werden kann, um die Rohrwendel RW im rechten Winkel zum Rohrverlauf zu trennen oder zu schneiden.

Danach wird die definiert abgelängte Rohrwendel RW in einem zweiten Konfektionierungsschritt an einem oder beiden Enden mit einem Knickschutz KS und/oder einem Anschlussstück AS versehen (vgl. die Fig. 13). Hierfür kann es je nach Art des Abgangs der Rohrwendel RW - Rohrwendel mit in Umfangsrichtung auslaufenden Rohrwendelenden, Rohrwendel mit in axialer Richtung der Wendel auslaufenden Rohrwendelenden oder Rohrwendel mit kombinierten Rohrwendelenden - zunächst notwendig sein, die Rohrwendel RW örtlich zu erwärmen und nochmals plastisch zu verformen, um ein oder beide Anschlussenden für einen axial verlaufenden Abgang abzuwinkeln, wie in Fig. 13 gezeigt.

Sodann wird, falls erforderlich oder gewünscht, der Knickschutz KS auf das jeweilige Ende der Rohrwendel RW aufgeschoben. Hierbei handelt es sich üblicherweise um eine metallische Schraubenfeder oder ein rohr- bzw. rohrbogenförmiges Kunststoffteil mit Farbcodierung, die/das sich zu einem Ende hin am Innenumfang verjüngt, so dass sie/es auf der Rohrwendel RW festgesetzt werden kann. Schließlich wird in das jeweilige Ende der Rohrwendel RW das zumeist metallische Anschlussstück AS bei Raumtemperatur eingepresst oder eingeschlagen, um die Rohrwendel RW entsprechend Fig. 13 zu komplettieren.

Auch gibt es einteilige oder vormontierte, kombinierte Knickschutz-/Anschlussteile (nicht gezeigt), die in einem Arbeitsgang am jeweiligen Ende der Rohrwendel montiert werden können. Die vorbeschriebenen Konfektionierungsschritte können schließlich mit ihren jeweiligen Unterschritten - Auseinanderziehen oder -spreizen der Rohrwendel RW / Trennen oder Schneiden der Rohrwendel RW / ggf. Abwinkeln des jeweiligen Rohrwendelendes / ggf. Anbringen des Knickschutzes KS am jeweiligen Rohrwendelende / Anbringen des Anschlussstücks AS oder eines kombinierten Knickschutz-/Anschlussteils am jeweiligen Rohrwendelende - vollständig automatisiert oder teilautomatisiert auf z.B. einem Rundtisch (nicht dargestellt) erfolgen.

Bei einem Verfahren zur Herstellung einer Rohrwendel aus einem thermoplastischen Kunststoff wird in einem ersten Formgebungsschritt ein rohrförmiges Extrudat über einen ringförmigen Düsenspalt eines Extruders extrudiert, bevor das vom Düsenspalt heruntergezogene, noch plastisch formfähige Extrudat in einem zweiten Formgebungsschritt direkt im Anschluss an den ersten Formgebungsschritt in einer Umformeinrichtung zur Erzielung eines geometrisch definierten Profilquerschnitts kalibriert sowie zu der Rohrwendel umgeformt wird, worauf die Rohrwendel mit dem geometrisch bestimmten Profilquerschnitt erstarrt, wobei das Kalibrieren des noch plastisch formfähigen Extrudats in der Umformeinrichtung unter der Zufuhr von Stützluft durch einen Hohlraum des Extrudats erfolgt. Dieses Verfahren ermöglicht eine Endlosfertigung der Rohrwendel mit einer im Hinblick auf Maß- und Formtoleranzen an dem Profilquerschnitt der Rohrwendel neuen, hohen Qualität. Ferner wird eine Vorrichtung zur Herstellung einer solchen Rohrwendel vorgeschlagen.

### BEZUGSZEICHENLISTE

- 10: Vorrichtung
- 12: Extruder
- 14: Spritzkopf
- 16: Düsenspalt
- 18: Umformeinrichtung
- 20: Kühleinrichtung
- 22: Rohrwendelabzug
- 24: Abzugsrolle
- 26: Grundgestell
- 28: Schneckenzylinder
- 30: Extruderschnecke
- 32: Drucklagerglocke
- 34: Getriebemotor
- 36: Befüllöffnung
- 38: Heiz-Kühl-Kombination
- 40: Kabelkanal
- 42: Grundkörper
- 44: Gewindebohrung
- 46: Flanschteil
- 48: Heizband
- 50: Zentrierring
- 52: Spritzkopfeinlauf
- 54: Distanzring
- 56: Stufenbohrung
- 58: Düsenhalter
- 60: Innenraum
- 62: Stegdornhalter
- 64: Außendüse
- 66: Innendüse
- 68: Zentrierschraube
- 70: Durchbruch
- 72: Sackbohrung
- 74: Querbohrung
- 76: Anschlussbohrung
- 78: Stützluftbohrung
- 80: Stirnfläche
- 82: Druckluftquelle
- 84: Formwelle
- 85: Innenring
- 86: Formwelle
- 87: Außenring
- 88: Wellenhalter
- 89: Mittelachse
- 90: Radialnut
- 91: Nutquerschnitt
- 92: Mittelachse
- 93: Mittelachse
- 94: Wellenstumpf
- 95: Wellensegment
- 96: magnetische Kupplung
- 97: komplementär ausgebildeten Strukturen
- 98: Stift
- 99: Ausnehmung
- 100: Antriebseinrichtung
- 102: Radialverteilergetriebe
- 103: Gestell
- 104: Elektromotor
- 106: Teleskop-Kreuzgelenkwelle
- 107: eingangsseitige Gehäusehälfte
- 108: ausgangsseitige Gehäusehälfte
- 109: Innenraum
- 110: erste Getriebestufe
- 111: Zahnrad der ersten Getriebestufe
- 112: zweite Getriebestufe
- 113: Zahnrad der zweiten Getriebestufe
- 114: Adapterglocke
- 116: Eingangswelle
- 118: Verbindungsstange
- 119: Befestigungsmittel
- 120: Ausgangswelle
- 121: Ausgangswelle
- 122: Ritzel
- 124: Wasserbecken
- 126: Düsenhalter
- 128: Düse
- 130: Drehantrieb
- 132: Gestellteil
- 134: Elektromotor
- 136: Riementrieb

- AS: Anschlussstück
- EX: Extrudat
- HR: Hohlraum
- KS: Knickschutz
- PQ: Profilquerschnitt
- RW: Rohrwendel

## Patentansprüche

1. Verfahren zur Herstellung einer Rohrwendel (RW) aus einem thermoplastischen Kunststoff, bei dem
in einem ersten Formgebungsschritt ein rohrförmiges Extrudat (EX) über einen ringförmigen Düsenspalt (16) eines Extruders (12) extrudiert wird und
das vom Düsenspalt (16) heruntergezogene, noch plastisch formfähige Extrudat (EX) in einem zweiten Formgebungsschritt direkt im Anschluss an den ersten Formgebungsschritt in einer Umformeinrichtung (18) zur Erzielung eines geometrisch definierten Profilquerschnitts (PQ) kalibriert sowie zu der Rohrwendel (RW) umgeformt wird,
bevor die Rohrwendel (RW) mit dem geometrisch bestimmten Profilquerschnitt (PQ) erstarrt,
wobei das Kalibrieren des noch plastisch formfähigen Extrudats (EX) in der Umformeinrichtung (18) unter der Zufuhr von Stützluft durch einen Hohlraum (HR) des Extrudats (EX) erfolgt.

2. Verfahren zur Herstellung einer Rohrwendel (RW) nach Anspruch 1,
wobei das noch plastisch formfähige Extrudat (EX) für den zweiten Formgebungsschritt mittels der Umformeinrichtung (18) vom Düsenspalt (16) heruntergezogen wird und/oder
wobei das Extrudat (EX) während des zweiten Formgebungsschritts in der Umformeinrichtung (18) aktiv gekühlt wird und/ oder
wobei das noch plastisch formfähige Extrudat (EX) in dem zweiten Formgebungsschritt zur Erzielung eines im Wesentlichen kreisringförmigen Profilquerschnitts (PQ) kalibriert wird und/ oder
wobei die erstarrte Rohrwendel (RW) nach Verlassen der Umformeinrichtung (18) in einem ersten Konfektionierungsschritt definiert abgelängt wird.

3. Verfahren zur Herstellung einer Rohrwendel (RW) nach Anspruch 2, wobei zur aktiven Kühlung des Extrudats (EX) in der Umformeinrichtung (18) ein flüssiges Kühlmittel verwendet wird.

4. Verfahren zur Herstellung einer Rohrwendel (RW) nach Anspruch 2 oder 3, wobei die definiert abgelängte Rohrwendel (RW) in einem zweiten Konfektionierungsschritt an einem oder beiden Enden mit einem Knickschutz (KS) und/oder einem Anschlussstück (AS) versehen wird.

5. Vorrichtung (10) zur Herstellung einer Rohrwendel (RW) aus einem thermoplastischen Kunststoff, insbesondere mit dem Verfahren nach einem der vorhergehenden Ansprüche, umfassend
einen Extruder (12) mit einem Spritzkopf (14), der einen ringförmigen Düsenspalt (16) aufweist, über den ein rohrförmiges Extrudat (EX) in einem plastisch formfähigen Zustand abgebbar ist, und
eine Umformeinrichtung (18) für die weitere Formgebung des plastisch formfähigen, rohrförmigen Extrudats (EX) zu der Rohrwendel (RW) mit einem geometrisch definiert kalibrierten Profilquerschnitt (PQ),
wobei die Umformeinrichtung (18) angetrieben und so bezüglich des Spitzkopfs (14) des Extruders (12) angeordnet ist, dass sie das rohrförmige Extrudat (EX) im plastisch formfähigen Zustand direkt vom ringförmigen Düsenspalt (16) herunterzuziehen vermag, und
wobei der Spritzkopf (14) des Extruders (12) eine Stützluftbohrung (78) aufweist, die an einer Stirnfläche (80) des Spritzkopfs (14) radial innerhalb des ringförmigen Düsenspalts (16) mündet.

6. Vorrichtung (10) zur Herstellung einer Rohrwendel (RW) nach Anspruch 5, wobei die Umformeinrichtung (18) eine Mehrzahl von drehend antreibbaren Formwellen (84, 86) aufweist, die derart an einem drehfesten Wellenhalter (88) angeordnet sind, dass sie einen Innenring (85) von Formwellen (84) und einen Außenring (87) von Formwellen (86) bilden, und wobei die Formwellen (84) des Innenrings (85) gegenläufig zu den Formwellen (86) des Außenrings (87) antreibbar sind, um das plastisch formfähige, rohrförmige Extrudat (EX) zwischen dem Innenring (85) und dem Außenring (87) zu fördern.

7. Vorrichtung (10) zur Herstellung einer Rohrwendel (RW) nach Anspruch 6,
wobei jede Formwelle (84, 86) eine Mehrzahl von formgebenden Radialnuten (90) mit einem geometrisch definierten Nutquerschnitt (91) aufweist, die entlang einer Mittelachse (92, 93) der Formwelle (84, 86) gesehen geringfügig beabstandet voneinander hintereinander angeordnet sind, und/oder
wobei die Formwellen (84, 86) entsprechend der Steigung der herzustellenden Rohrwendel (RW) unterschiedlich weit von dem Wellenhalter (88) vorstehen und/oder mit ihren Mittelachsen (92, 93) bezüglich einer Mittelachse (89) des Wellenhalters (88) verkippt sind, um mit ihren formgebenden Radialnuten (90) eine im Wesentlichen spiralförmige Bahn für das plastisch formfähige, rohrförmige Extrudat (EX) zu bilden, und/oder
wobei mindestens eine Formwelle (86) des Außenrings (87) mehrteilig ausgebildet ist, mit einem im Wellenhalter (88) drehbar gelagerten Wellenstumpf (94) und einem daran lösbar anbringbaren Wellensegment (95), welches formgebende Radialnuten (90) der Formwelle (86) aufweist, und/oder
wobei die Formwellen (86) des Außenrings (87) und die Formwellen (84) des Innenrings (85) mittels einer gemeinsamen Antriebseinrichtung (100) antreibbar sind.

8. Vorrichtung (10) zur Herstellung einer Rohrwendel (RW) nach Anspruch 7, wobei die formgebenden Radialnuten (90) der Formwellen (84, 86) einen im Wesentlichen halbkreisförmigen Nutquerschnitt (91) aufweisen.

9. Vorrichtung (10) zur Herstellung einer Rohrwendel (RW) nach Anspruch 7 oder 8,
wobei die mehrteilig ausgebildete Formwelle (86) des Außenrings (87) eine magnetische Kupplung (96) aufweist, die dazu dient, das Wellensegment (95) lösbar am Wellenstumpf (94) zu halten, und/oder
wobei das Wellensegment (95) und der Wellenstumpf (94) der mehrteilig ausgebildeten Formwelle (86) des Außenrings (87) mit komplementär ausgebildeten Strukturen (97) versehen sind, die zur Drehmomentübertragung formschlüssig miteinander in Eingriff bringbar sind.

10. Vorrichtung (10) zur Herstellung einer Rohrwendel (RW) nach Anspruch 9, wobei die komplementär ausgebildeten Strukturen (97) an Wellensegment (95) und Wellenstumpf (94) durch Stifte (98) an dem einen Teil und nach außen offene Ausnehmungen (99) an dem anderen Teil gebildet sind, die im montierten Zustand der mehrteilig ausgebildeten Formwelle (86) des Außenrings (87) ineinandergreifen.

11. Vorrichtung (10) zur Herstellung einer Rohrwendel (RW) nach einem der Ansprüche 7 bis 10, wobei die Antriebseinrichtung (100) einen Motor (104) hat, der mit einer Eingangswelle (116) eines Radialverteilergetriebes (102) in Antriebsverbindung steht, das entsprechend der Anzahl der Formwellen (84, 86) der Umformeinrichtung (18) Ausgangswellen (120, 121) aufweist, die ihrerseits mit jeweils einer Formwelle (84, 86) der Umformeinrichtung (18) in Antriebsverbindung stehen.

12. Vorrichtung (10) zur Herstellung einer Rohrwendel (RW) nach Anspruch 11,
wobei die Ausgangswellen (120, 121) des Radialverteilergetriebes (102) über Teleskop-Kreuzgelenkwellen (106) mit den Formwellen (84, 86) der Umformeinrichtung (18) in Antriebsverbindung stehen und/oder
wobei das Radialverteilergetriebe (102) der Antriebseinrichtung (100) zwei Getriebestufen (110, 112) aufweist, nämlich eine Getriebestufe (110) für den Antrieb der Formwellen (84) des Innenrings (85) und eine Getriebestufe (112) für den Antrieb der Formwellen (86) des Außenrings (87), und wobei die Übersetzungen der Getriebestufen (110, 112) derart gewählt sind, dass sich an den Formwellen (84) des Innenrings (85) und den Formwellen (86) des Außenrings (87) unterschiedliche Umfangsgeschwindigkeiten einstellen, um das Extrudat (EX) im Wesentlichen verzugsfrei durch die Umformeinrichtung (18) zu fördern.

13. Vorrichtung (10) zur Herstellung einer Rohrwendel (RW) nach einem der Ansprüche 5 bis 12,
wobei der Umformeinrichtung (18) im Materialfluss nachgeordnet ein Rohrwendelabzug (22) vorgesehen ist, der zwei sich im Wesentlichen parallel zueinander erstreckende Abzugsrollen (24) aufweist, die dazu angepasst sind, die Rohrwendel (RW) nach Verlassen der Umformeinrichtung (18) drehend aufzulagern, und/oder
wobei im Bereich der Umformeinrichtung (18) eine Kühleinrichtung (20) zur Abgabe eines Kühlfluids vorgesehen ist, mittels der das durch die Umformeinrichtung (18) geförderte Extrudat (EX) aktiv kühlbar ist.

14. Vorrichtung (10) zur Herstellung einer Rohrwendel (RW) nach Anspruch 13, wobei der Rohrwendelabzug (22) einen Drehantrieb (130) aufweist, mittels dessen die Abzugsrollen (24) entgegen der Drehrichtung der von der Umformeinrichtung (18) abgegebenen Rohrwendel (RW) gleichsinnig drehend antreibbar sind.

## Claims

1. A method of producing a coiled tubing (RW) from a thermoplastic plastics material, in which
in a first shaping step a tubular extrudate (EX) is extruded by way of an annular nozzle gap (16) of an extruder (12) and
the extrudate (EX), which is drawn down from the nozzle gap (16) and capable of being shaped plastically, is calibrated and formed into the coiled tubing (RW) in a second shaping step directly subsequent to the first shaping step in a shaping device (18) to achieve a geometrically defined profile cross-section (PQ),
before the coiled tubing (RW) with the geometrically defined profile cross-section (PQ) solidifies,
wherein the calibrating of the extrudate (EX) capable of being shaped plastically is carried out in the shaping device (18) with the feed of supporting air via a cavity (HR) of the extrudate (EX).

2. A method of producing a coiled tubing (RW) according to claim 1,
wherein the extrudate (EX) capable of being shaped plastically is for the second shaping step drawn down from the nozzle gap (16) by the shaping device (18) and/or
wherein the extrudate (EX) is actively cooled during the second shaping step in the shaping device (18) and/or
wherein the extrudate (EX) capable of being shaped plastically is calibrated in the second shaping step so as to achieve a substantially circularly annular profile cross-section (PQ) and/or
wherein the solidified coiled tubing (RW) after leaving the shaping device (18) is cut to length in defined manner in a first making-up step.

3. A method of producing a coiled tubing (RW) according to claim 2, wherein a liquid coolant is used for active cooling of the extrudate (EX) in the shaping device (18).

4. A method of producing a coiled tubing (RW) according to claim 2 or 3, wherein the coiled tubing (RW) cut to defined length is provided in a second making-up step with a kink protection (KS) and/or a connecting member (AS) at one end or both ends.

5. A device (10) for producing a coiled tubing (RW) from a thermoplastic plastics material, particularly by the method according to any one of the preceding claims, comprising
an extruder (12) with an injection head (14) having an annular nozzle gap (16) by way of which a tubular extrudate (EX) can be delivered in a state capable of being shaped plastically, and
a shaping device (18) for further shaping of the tubular extrudate (EX), which is capable of being shaped plastically, to form the coiled tubing (RW) with a profile cross-section (PQ) of geometrically defined size,
wherein the shaping device (18) is driven and so arranged with respect to the injection head (14) of the extruder (12) that it is capable of drawing down the tubular extrudate (EX), in the state capable of being shaped plastically, directly from the annular nozzle gap (16), and
wherein the injection head (14) of the extruder (12) has a supporting air bore (78) which opens at an end surface (80) of the injection head (14) radially within the annular nozzle gap (16).

6. A device (10) for producing a coiled tubing (RW) according to claim 5, wherein the shaping device (18) comprises a plurality of rotationally drivable shaping shafts (84, 86) which are so arranged at a shaft mount (88) secure against rotation that they form an inner ring (85) of shaping shafts (84) and an outer ring (87) of shaping shafts (86), and wherein the shaping shafts (84) of the inner ring (85) are drivable in opposite direction to the shaping shafts (86) of the outer ring (87) so as to convey the tubular extrudate (EX), which is capable of being shaped plastically, between the inner ring (85) and the outer ring (87).

7. A device (10) for producing a coiled tubing (RW) according to claim 6,
wherein each shaping shaft (84, 86) has a plurality of shape-imparting radial grooves (90) with a geometrically defined groove cross-section (91), the grooves being arranged in succession at a slight spacing from one another as seen along a center axis (92, 93) of the shaping shaft (84, 86), and/or
wherein the shaping shafts (84, 86) project to different extent from the shaft mount (88) in correspondence with the pitch of the coiled tubing (RW) to be produced and/or are tilted by the center axes (92, 93) thereof with respect to a center axis (89) of the shaft mount (88) so as to form by their shape-imparting radial grooves (90) a substantially helical path for the tubular extrudate (EX) which is capable of being shaped plastically, and/or
wherein at least one shaping shaft (86) of the outer ring (87) is of multi-part construction with a shaft stub (94), which is rotatably mounted in the shaft mount (88), and a shaft segment (95), which can be detachably mounted on the shaft stub and which has shape-imparting radial grooves (90) of the shaping shaft (86), and/or
wherein the shaping shafts (86) of the outer ring (87) and the shaping shafts (84) of the inner ring (85) are drivable by a common drive device (100).

8. A device (10) for producing a coiled tubing (RW) according to claim 7, wherein the shape-imparting radial grooves (90) of the shaping shafts (84, 86) have a substantially semicircular groove cross-section (91).

9. A device (10) for producing a coiled tubing (RW) according to claim 7 or 8,
wherein the shaping shaft (86), which is of multi-part construction, of the outer ring (87) has a magnetic coupling (96) serving the purpose of detachably retaining the shaft segment (95) at the shaft stub (94), and/or
wherein the shaft segment (95) and the shaft stub (94) of the shaping shaft (96), which is of multi-part construction, of the outer ring (87) are provided with structures (97) which are of complementary configuration and which can be brought into interlocking mutual engagement for transmission of torque.

10. A device (10) for producing a coiled tubing (RW) according to claim 9, wherein the complementary formed structures (97) at the shaft segment (95) and shaft stub (94) are formed by pins (98) at one part and outwardly open recesses (99) at the other part, which pins and recesses interengage in the mounted state of the shaping shaft (86), which is of multi-part construction, of the outer ring (87).

11. A device (10) for producing a coiled tubing (RW) according to any one of claims 7 to 10, wherein the drive device (100) has a motor (104) which is in driving connection with an input shaft (116) of a radial transfer transmission (102), which in correspondence with the number of shaping shafts (84, 86) of the shaping device (18) has output shafts (120, 121) which in turn are each in driving connection with a respective shaping shaft (84, 86) of the shaping device (18).

12. A device (10) for producing a coiled tubing (RW) according to claim 11,
wherein the output shafts (120, 121) of the radial transfer transmission (102) are in driving connection with the shaping shafts (84, 86) of the shaping device (18) by way of telescopic universal-joint shafts (106) and/or
wherein the radial transfer transmission (102) of the drive device (100) comprises two transmission stages (110, 112), namely a transmission stage (110) for drive of the shaping shafts (84) of the inner ring (85) and a transmission stage (112) for drive of the shaping shafts (86) of the outer ring (87), and wherein the translation ratios of the transmission stages (110, 112) are selected in such a way that different circumferential speeds arise at the shaping shafts (84) of the inner ring (85) and the shaping shafts (86) of the outer ring (87) so as to convey the extrudate (EX) through the shaping device (18) substantially free of distortion.

13. A device (10) for producing a coiled tubing (RW) according to any one of claims 5 to 12,
wherein a coiled tubing take-off (22) is provided downstream of the shaping device (18) in the material flow, comprising two take-off rollers (24), which extend substantially parallel to one another and which are adapted for the purpose of rotationally supporting the coiled tubing (RW) after leaving the shaping device (18), and/or
wherein a cooling device (20) for delivery of a cooling fluid, by which the extrudate (EX) conveyed by the shaping device (18) can be actively cooled, is provided in the region of the shaping device (18).

14. A device (10) for producing a coiled tubing (RW) according to claim 13, wherein the coiled tubing take-off (22) comprises a rotary drive (130) by which the take-off rollers (24) are rotationally drivable in the same direction counter to the rotational direction of the coiled tubing (RW) delivered by the shaping device (18).

## Revendications

1. Procédé de fabrication d'une hélice tubulaire (RW) en matière thermoplastique, dans lequel,
lors d'une première étape de formage, un extrudat tubulaire (EX) est extrudé par une fente de buse annulaire (16) d'une extrudeuse (12) et
l'extrudat (EX) tiré vers le bas par la fente de buse (16) est transformé en une hélice tubulaire, l'extrudat (EX) encore plastiquement déformable est calibré dans une deuxième étape de formage, directement après la première étape de formage, dans un dispositif de formage (18) pour obtenir une section transversale de profil (PQ) géométriquement définie et est transformé en hélice tubulaire (RW),
avant que l'hélice tubulaire (RW) ne se solidifie avec la section transversale de profil (PQ) déterminée géométriquement,
le calibrage de l'extrudat (EX) encore plastiquement déformable s'effectuant dans le dispositif de formage (18) avec la conduite d'alimentation en air d'appoint à travers une cavité (HR) de l'extrudat (EX).

2. Procédé de fabrication d'une hélice tubulaire (RW) selon la revendication 1,
dans lequel l'extrudat (EX) encore plastiquement déformable est tiré vers le bas à partir de la fente de buse (16) pour la deuxième étape de formage au moyen du dispositif de formage (18) et/ou
dans lequel l'extrudat (EX) est refroidi activement dans le dispositif de formage (18) pendant la deuxième étape de formage et/ou
dans lequel l'extrudat (EX) encore plastiquement déformable est calibré dans la deuxième étape de formage pour obtenir une section transversale de profil (PQ) sensiblement en forme d'anneau circulaire et/ ou
dans lequel l'hélice tubulaire (RW) solidifiée est découpée de manière prédéfinie après avoir quitté le dispositif de formage (18) au cours d'une première étape de confection.

3. Procédé de fabrication d'une hélice tubulaire (RW) selon la revendication 2, dans lequel un agent de refroidissement liquide est utilisé pour le refroidissement actif de l'extrudat (EX) dans le dispositif de formage (18).

4. Procédé de fabrication d'une hélice tubulaire (RW) selon la revendication 2 ou 3, dans lequel l'hélice tubulaire (RW) découpée de manière prédéfinie est pourvue, au cours d'une deuxième étape de confection, d'une protection anti-courbure (KS) et/ou d'une pièce de raccordement (AS) à une ou aux deux extrémités.

5. Dispositif (10) pour la fabrication d'une hélice tubulaire (RW) en matière thermoplastique, en particulier avec le procédé selon l'une des revendications précédentes, comprenant
une extrudeuse (12) avec une tête d'injection (14) qui présente une fente de buse annulaire (16) par laquelle un extrudat tubulaire (EX) peut être formé dans un état plastiquement déformable, et
un dispositif de formage (18) pour le formage ultérieur de l'extrudat tubulaire plastiquement déformable (EX) en hélice tubulaire (RW) avec une section transversale de profil (PQ) calibrée de manière géométriquement prédéfinie,
le dispositif de formage (18) étant entraîné et agencé par rapport à la tête d'injection (14) de l'extrudeuse (12), de telle sorte qu'il puisse tirer vers le bas l'extrudat tubulaire (EX) à l'état plastiquement déformable directement à partir de la fente de buse annulaire (16), et
la tête d'injection (14) de l'extrudeuse (12) présentant un alésage d'air d'appui (78) qui débouche sur une surface frontale (80) de la tête d'injection (14) radialement à l'intérieur de la fente de buse annulaire (16).

6. Dispositif (10) pour la fabrication d'une hélice tubulaire (RW) selon la revendication 5, dans lequel le dispositif de formage (18) présente une pluralité d'arbres de formage (84, 86) pouvant être entraînés en rotation, qui sont disposés sur un support d'arbre (88) fixe en rotation de telle sorte qu'ils forment un anneau intérieur (85) d'arbres de formage (84) et un anneau extérieur (87) d'arbres de formage (86), et dans lequel les arbres de formage (84) de l'anneau intérieur (85) peuvent être entraînés en sens inverse des arbres de formage (86) de l'anneau extérieur (87) afin de transporter l'extrudat tubulaire plastiquement déformable (EX) entre l'anneau intérieur (85) et l'anneau extérieur (87).

7. Dispositif (10) pour la fabrication d'une hélice tubulaire (RW) selon la revendication 6,
chaque arbre de formage (84, 86) présentant une pluralité de rainures radiales de formage (90) avec une section transversale de rainure (91) géométriquement définie qui, vues le long d'un axe médian (92, 93) de l'arbre de formage (84, 86), sont agencées les unes derrière les autres à faible distance les unes des autres, et/ou
les arbres de formage (84, 86) dépassant du support d'arbre (88) à des distances différentes en fonction du pas de l'hélice tubulaire (RW) à fabriquer et/ou étant basculés avec leurs axes médians (92, 93) par rapport à un axe central (89) du support d'arbre (88) afin de former avec leurs rainures radiales de formage (90) une trajectoire sensiblement en forme de spirale pour l'extrudat tubulaire (EX) plastiquement déformable, et/ou
au moins un arbre de formage (86) de l'anneau extérieur (87) étant réalisé en plusieurs parties, avec un bout d'arbre (94) logé de manière rotative dans le support d'arbre (88) et un segment d'arbre (95) pouvant être monté de manière amovible sur celui-ci, lequel présente des rainures radiales de formage (90) de l'arbre de formage (86), et/ou
les arbres de formage (86) de l'anneau extérieur (87) et les arbres de formage (84) de l'anneau intérieur (85) pouvant être entraînés au moyen d'un dispositif d'entraînement commun (100).

8. Dispositif (10) pour la fabrication d'une hélice tubulaire (RW) selon la revendication 7, dans lequel les rainures radiales de formage (90) des arbres de formage (84, 86) présentent une section transversale de rainure (91) sensiblement semi-circulaire.

9. Dispositif (10) pour la fabrication d'une hélice tubulaire (RW) selon la revendication 7 ou 8,
dans lequel l'arbre de formage (86) de l'anneau extérieur (87), réalisé en plusieurs parties, présente un accouplement magnétique (96) qui sert à maintenir de manière amovible le segment d'arbre (95) sur le bout d'arbre (94), et/ou
le segment d'arbre (95) et le bout d'arbre (94) de l'arbre de formage (86) de l'anneau extérieur (87) réalisé en plusieurs parties étant pourvus de structures (97) réalisées de manière complémentaire, qui peuvent être mises en engagement l'une avec l'autre par complémentarité de forme pour la transmission du couple.

10. Dispositif (10) pour la fabrication d'une hélice tubulaire (RW) selon la revendication 9, dans lequel les structures (97) réalisées de manière complémentaire sur le segment d'arbre (95) et le bout d'arbre (94) sont formées par des broches (98) sur l'une des parties et par des évidements (99) ouverts vers l'extérieur sur l'autre partie, qui s'engagent les uns dans les autres à l'état monté de l'arbre de formage (86) réalisé en plusieurs parties de l'anneau extérieur (87).

11. Dispositif (10) pour la fabrication d'une hélice tubulaire (RW) selon l'une quelconque des revendications 7 à 10, dans lequel le dispositif d'entraînement (100) a un moteur (104) qui est en liaison d'entraînement avec un arbre d'entrée (116) d'un engrenage de répartition radiale (102) qui présente, en fonction du nombre d'arbres de formage (84, 86) du dispositif de formage (18), des arbres de sortie (120, 121) qui sont eux-mêmes en liaison d'entraînement avec un arbre de formage respectif (84, 86) du dispositif de formage (18).

12. Dispositif (10) pour la fabrication d'une hélice tubulaire (RW) selon la revendication 11,
dans lequel les arbres de sortie (120, 121) de l'engrenage de distribution radiale (102) sont en liaison d'entraînement avec les arbres de formage (84, 86) du dispositif de formage (18) par l'intermédiaire d'arbres à joint universel (106) et/ou
l'engrenage de répartition radiale (102) du dispositif d'entraînement (100) présente deux étages d'engrenage (110, 112), à savoir un étage d'engrenage (110) pour l'entraînement des arbres de formage (84) de l'anneau intérieur (85) et un étage d'engrenage (112) pour l'entraînement des arbres de formage (86) de l'anneau extérieur (87), et les rapports de transmission des étages d'engrenage (110, 112) étant choisis de telle sorte que des vitesses périphériques différentes s'établissent sur les arbres de formage (84) de l'anneau intérieur (85) et sur les arbres de formage (86) de l'anneau extérieur (87) afin de transporter l'extrudat (EX) essentiellement sans déformation à travers le dispositif de formage (18).

13. Dispositif (10) pour la fabrication d'une hélice tubulaire (RW) selon l'une des revendications 5 à 12,
dans lequel il est prévu, en aval du dispositif de formage (18) dans le flux de matière, un extracteur d'hélice tubulaire (22) qui présente deux rouleaux d'extraction (24) s'étendant sensiblement parallèlement l'un à l'autre, qui sont adaptés pour appuyer l'hélice tubulaire (RW) en rotation après qu'elle a quitté le dispositif de formage (18), et/ou
un dispositif de refroidissement (20) étant prévu dans la zone du dispositif de formage (18) pour délivrer un fluide de refroidissement au moyen duquel l'extrudat (EX) transporté par le dispositif de formage (18) peut être refroidi activement.

14. Dispositif (10) pour la fabrication d'une hélice tubulaire (RW) selon la revendication 13, dans lequel l'extracteur d'hélice tubulaire (22) présente un entraînement rotatif (130) au moyen duquel les rouleaux d'extraction (24) peuvent être entraînés en rotation dans le même sens, en sens inverse du sens de rotation de l'hélice tubulaire (RW) délivrée par le dispositif de formage (18).
